# EUROPEAN PATENT SPECIFICATION

(11) **EP 1 844 449 B1**
(45) Date of publication and mention of the grant of the patent: **26.10.2011**
(21) Application number: 05852588.2
(22) Date of filing: 29.11.2005
(51) Int. Cl.: G07B 17/00

(54) **SYSTEM, METHOD AND COMPUTER PROGRAM PRODUCT FOR CONTAINERIZED SHIPPING OF MAIL PIECES**
SYSTEM, VERFAHREN UND COMPUTERPROGRAMMPRODUKT ZUM BEHÄLTERISIERTEN VERSANDT VON POSTSTÜCKEN
SYSTÈME, PROCÉDÉ ET PROGICIEL DESTINÉS AU TRANSPORT PAR CONTENEURS D'ÉLÉMENTS DE COURRIER

(30) Priority: 30.11.2004 US 999558
(43) Date of publication of application: 17.10.2007
(73) Proprietor: UNITED PARCEL SERVICE OF AMERICA, INC., Atlanta, GA 30328 (US)
(72) Inventor: KADABA, Nagesh, Roswell, GA 30075 (US)
(74) Representative: Chettle, Adrian John
(86) International application number: PCT/US2005/043400
(87) International publication number: WO 2006/060529

(56) References cited:
- WO-A-02/058308
- US-A- 5 043 908
- US-A1- 2004 054 552
- US-A1- 2004 083 228
- US-A1- 2004 188 522
- US-B1- 6 195 174

## Description

### Field of the Invention

The present invention relates generally to the technology of mail handling and more particularly to computer systems, devices, processes and methods for pre-sorting mail before entry into a postal service delivery system.

### Description of Related Art

Many government postal services, including the United States Postal Service, offer a reduced postage rate for pre-sorted mail. Pre-sorting reduces the processing burden on the postal service and speeds delivery. Postal service regulations often impose stringent standards for pre-sorted mail which are expensive and difficult to meet, especially for mail senders with fewer than several thousand mail pieces. Standards governing such characteristics as batch volume, size uniformity, destination variety, batch certification, typeface, zip code length, and bar coding, make it difficult to obtain the lowest rate for pre-sorted mail.

A mail sender may employ personnel and buy specialized equipment to pre-sort its mail, or it may use the services of a mail pre-sorting facility. Mail presorting facilities stay abreast of postal regulations and offer pre-sorting services along with documentation certifying that each batch of pre-sorted mail complies with postal service regulations. Most mail pre-sorting facilities, however, only serve customers with large batches of mail; for example, greater than two thousand pieces. Low-volume customers, therefore, must perform their own sorting and regulation compliance or pay the higher postage rate. Many low-volume customers lack the technology and the personnel to pre-sort and meet the stringent postal regulations, so instead they pay the higher postage rate.

Customers with the technology, equipment, and personnel may be able to achieve the level of pre-sorting necessary to qualify for a reduc

The postal regulations typically include a list of published rates which are correlated to the degree of pre-sorting accomplished and other factors. For example, a batch of two thousand or more mail pieces, of similar weight and size, may qualify for a lower rate instead of the first-class or full rate. To earn this kind of discount, the customer must learn and comply with the regulations and published rates of the local postal service, apply postage to each mail piece at the published rate using a postage meter to accommodate a decimal rate pre-sort the entire batch as required, prepare documents such as a certificate and/or a manifest certifying compliance with the applicable postal regulations, and then deliver the sorted batch to the local post office because such a batch would be too large for collection by a mail carrier.

The low-volume customer, therefore, is faced with multiple barriers to entry when seeking a reduced postage rate. From the pre-sorting task to the burden of transporting the batch to a post office, the low-volume customer is prohibited in many cases from obtaining a reduced postage rate in an economically feasible manner.

In some countries; government postal services sort incoming mail using both manual labor and sorting machines. Commercial pre-sorting, where available, reduces the processing burden on the postal service and speeds delivery. Most presorting businesses, however, will only sort large batches of mail; for example, greater than two thousand pieces. Smaller batches, therefore, are often submitted directly to the postal service for sorting and delivery.

The burden of sorting these smaller batches of up to two thousand pieces creates additional expense for the postal service and causes a delay in mail delivery. Increased sorting expenses often result in higher postage rates and/or unacceptable delays in delivery. Where commercial pre-sorting is not available, the postal service must carry the burden of sorting incoming batches of all sizes.

Many postal services lack the resources to continually upgrade and install new sorting equipment. As the number and variety of incoming mail increases, the need to successfully manage and allocate sorting resources becomes more important. In some cases, a postal service depends on commercial pre-sorting to handle the very large batches of mail, while depending upon its own sorting equipment to handle the smaller batches.

Many businesses in the developing economies generate medium-sized batches of mail that are too small for commercial pre-sorting (less than two thousand pieces, for example), but yet are so large that the batch imposes a significant burden on the postal service. For example, if a few businesses each submit a batch of eighteen hundred mail pieces on a single day to be sorted, such a request may be beyond the sorting capacity of the post office. The burden caused by these medium-sized batches is a technical problem requiring an innovative solution.

Most mail senders lack the technology, equipment, and knowledge to do their own pre-sorting. Some postal services promulgate rules and regulations for pre-sorted mail that are difficult or impractical to learn and understand for the customer who only has an occasional, medium-sized batch of mail. Furthermore, many postal services require documentation such as a certificates and detailed manifests to certify compliance with the applicable postal regulations. Customers who do not pre-sort on a regular basis will be unfamiliar with the current requirements.

While some postal services publish reduced postage rates for pre-sorted mail, many government postal services only offer reduced postage rates to customers who have the knowledge and the willingness to negotiate for a lower rate. Customers with ongoing relationships with the local postal service may be able to achieve a lower rate, but customers who only seldom have a large batch of mail typically lack the resources and information to contact the postal service and obtain a lower rate. Also, customers unfamiliar with the local customs and practices typically decide to submit their medium-sized batches directly to the postal service for sorting instead of taking the time and incurring the expense associated with learning about and negotiating with the postal service.

Because of these barriers to entry for lower-volume mail senders, many government postal services face increasing demands on akeady-overburdened sorting equipment.

It would therefore be advantageous to have a method and system of processing mail pieces for low-volume mail senders that earns a reduced postage rate by pre-sorting relatively small batches of mail prior to receipt by a postal service. It would also be advantageous to have a method and system for enabling low-volume mail senders to participate in a discounted-rate mail system of the postal service.

WO-A-02/058308 discloses an aid for sorting mail into containers, but does not provide for tracking of items when in a container.

US-A-2005/0188522 discloses a mail tracking system in which information on the mailings in the shipment is provided by the mailer.

### BRIEF SUMMARY OF THE INVENTION

The present invention meets the above needs, and achieves other advantages, by providing a mail delivery system for facilitating delivery and tracking of a plurality of mail pieces sorted into a plurality of containers to a postal service. Generally, the mail delivery system includes various systems that are configured to obtain mail piece information describing the mail pieces sorted into the containers, associate the mail piece information with identifiers of the containers into which they were sorted, track delivery of the containers by gathering delivery information associated with the container identifiers and associate the mail piece information with the container tracking information using the container identifiers. Advantageously, the present invention solves the technical problem of how to accurately and efficiently track individual mail pieces even when the mail pieces are inside a container. Some of the more detailed embodiments of the mail delivery system of the present invention are described below.

For example, the mail delivery system of one embodiment of the present invention includes a mail piece information apparatus configured to determine information about each of the mail pieces by optically scanning barcodes or delivery addresses of the mail pieces. A sorting apparatus of the system is configured to direct the mail pieces amongst a plurality of containers and includes a controller configured to associate the mail piece information of the mail pieces in each of the containers with an identifier of the container. For instance, the sorting apparatus may correlate the order in which the mail pieces were directed to the container with the order in which shipment services are requested for the containers via a shipment order interface of the mail delivery system. Manifests describing the mail pieces in the containers, and delivery of the containers to a postal service location, are generated by the system by correlating, using the identifier, tracking information associated with the container identifiers with the contents information associated the container identifiers.

Another embodiment of the present invention includes a mail delivery information system for facilitating delivery of a plurality of mail pieces to a postal service. Included in the mail delivery information system is a mail piece information apparatus that is configured to determine mail piece information associated with each of the mail pieces. An identification generation apparatus is configured to generate a plurality of identifiers, wherein each of the identifiers is associated with a respective one of a plurality of containers. Connected in communication with the mail piece information apparatus and the identification generation apparatus, is a sorting apparatus controller. The sorting apparatus controller is configured to obtain the mail piece information associated with each of the mail pieces from the mail piece information apparatus and the identifier associated with each of the containers from the identification generation apparatus. In addition, the sorting apparatus controller is configured to direct a portion of the mail pieces to a selected one of the containers using the mail piece information and correlate the portion of the mail pieces with the identifier of the selected container. A tracking computer system of the mail delivery information system is connected in communication with a plurality of tracking devices. The tracking computer system is configured to receive tracking information from one of the tracking devices, wherein the information indicates detection, at a postal service transfer location, of the identifier associated with the selected container. Connected in communication with the sorting apparatus controller, the tracking system and the postal service is an electronic manifest generation system. The manifest generation system is configured to obtain the tracking information from the tracking system. In addition, the manifest generation system can generate a manifest by correlating, using the identifier of the container, the mail piece information associated with each of the mail pieces in the container and the tracking information indicated detection of the container at the postal service transfer location. Further, the manifest generation system can be configured to communicate the manifest to the postal service so as to facilitate billing and further delivery of the mail pieces.

The mail piece information system can determine the mail piece information using a scanner which generates the mail piece information by optically scanning each of the mail pieces. For instance, the scanner may be capable of optical character recognition allowing it to recognize delivery information printed on each of the mail pieces. Alternatively, the mail piece information system may include a scanner configured to scan a barcode on each of the mail pieces.

In an instance where the mail piece information or the mail piece barcode includes delivery information, the sorting apparatus controller may be further configured to sort the mail pieces into containers based on a zip code of the delivery information. For instance, all of the mail in a single container may be bound to the same zip code.

To facilitate a determination of which mail pieces are in a container, the sorting apparatus may be configured to track a number and an order of the mail pieces directed to each of the containers prior to closing of the containers. The number and order of mail pieces can then be used to correlate the delivery information of the mail pieces sorted into each of the containers with the identifier of each of the containers.

In another aspect, the tracking information indicates optical detection of the identifiers associated with the container because the tracking devices are capable of an optical scan. Also, the tracking computer system may be further configured to receive tracking information from other tracking devices indicating detection of the identifiers along a delivery route to the postal service transfer location. This additional delivery route tracking information may be correlated with the identifier of the container in the manifest by the manifest generation system.

As another aspect, the system may further include a mail piece counter that is configured to record a customer identity, receive a plurality of mail pieces associated with the customer identity, generate a count of the mail pieces and associate the count with the customer identity. A billing computer system connected in communication with the mail piece counter is configured to obtain the count and calculate a cost of sorting and delivery services for the mail pieces, wherein the cost is in proportion to the count. Further, the billing system may be configured to generate an electronic bill describing the calculated cost of the sorting and delivery services, and submit the bill to the consignor. Payment may also be received by the billing system, such as by electronic payment of funds for the electronic bill.

In still another aspect, the billing system may cooperate with the electronic manifest generation system to determine an amount of funds for payment to the postal service for the services described in the manifest and transmit the funds to the postal service.

The identification generation apparatus may also be further configured to generate a label for each of the containers having its respective one of the identifiers. For instance, the identification generation apparatus may be include a label printing device which can print out a label with an identifier. The label may then be affixed to the container.

The present invention has many advantages. For example, the containerized mail shipping system of the present invention allows tracking of mail pieces even when inside the containers. Shipping of mail in containers advantageously allows the sorted state of the mail pieces to be maintained so that qualifications for discounted shipping rates can be met. In addition, the containerized mail shipping system is capable of creating manifests describing the contents of each of the containers, the number of mail pieces submitted by each consignor, the number, identity, origin and destination of mail pieces sorted and shipped to the postal service at the end of each day and delivery of the mail pieces and containers to the postal service. These manifests, and other information, can be transmitted electronically to the various parties involved in delivery of the mail pieces, including the consignor and the postal service to facilitate billing and auditing for the deliveries.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 is a schematic depiction of a containerized mail delivery system of one embodiment of the present invention;
Figure 2 is a schematic depiction of a local sorting facility of the containerized mail delivery system of Figure 1;
Figure 3 is a schematic depiction of a computer system of the sorting facility depicted in Figure 2;
Figure 4 is a schematic depiction of a shipping computer system of the containerized mail delivery system of Figure 1;
Figure 5 is a schematic depiction of a containerized mail shipping system of another embodiment of the present invention;
Figure 6 is a schematic depiction of a containerized mail shipping system of yet another embodiment of the present invention;
Figure 7 is a schematic depiction of a processing system of a containerized mail shipping system of another embodiment of the present invention;
Figure 8 is a schematic of a combined carrier shipping system of the present invention that can be selectively combined or operated with the containerized mail delivery system shown in Figure 1;
Figure 9 is a schematic of the physical delivery facilities of the combined carrier shipping system shown in Figure 8;
Figure 10 is a label containing indicia to facilitate transfer of delivery from a first to a second carrier and also from the second carrier to a recipient, said label being another embodiment of the present invention that can be selectively combined or operated with the containerized mail delivery system shown in Figure 1;
Figure 11 is a schematic of another embodiment of a combined carrier shipping system of the present invention including the creation of electronic manifests that can be selectively combined or operated with the containerized mail delivery system shown in Figure 1;
Figure 12 is a schematic of another embodiment of a combined carrier shipping system of the present invention that can be selectively combined or operated with the containerized mail delivery system shown in Figure 1;
Figure 13 is a block diagram of a first carrier computer system of yet another embodiment of the present invention that can be selectively combined or operated with the containerized mail delivery system shown in Figure 1;
Figure 14 is a schematic of a flow of tracking information in a shipping system according to the present invention that can be selectively combined or operated with the containerized mail delivery system shown in Figure 1;
Figure 15 is a schematic of a flow of preprocessing of a package by a shipper of shipping system illustrated in Figure 8;
Figure 16 is a schematic of another embodiment of a combined carrier shipping system of the present invention including an electronic mail confirmation of delivery sent to a recipient that can be selectively combined or operated with the containerized mail delivery system shown in Figure 1;
Figure 17 is a schematic of a billing system of another embodiment of the present invention that can be selectively combined or operated with the containerized mail delivery system shown in Figure 1;
Figure 18 is a schematic of a quality control system of another embodiment of the present invention that can be selectively combined or operated with the containerized mail delivery system shown in Figure 1;
Figure 19 is a schematic of a returns system of another embodiment of the present invention that can be selectively combined or operated with the containerized mail delivery system shown in Figure 1; and
Figure 20 is a another label containing indicia to facilitate transfer of delivery from a first to a second carrier and also from the second carrier to a recipient, said label being another embodiment of the present invention that can be selectively combined or operated with the containerized mail delivery system shown in Figure 1.

### DETAILED DESCRIPTION OF THE INVENTION

The present invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout.

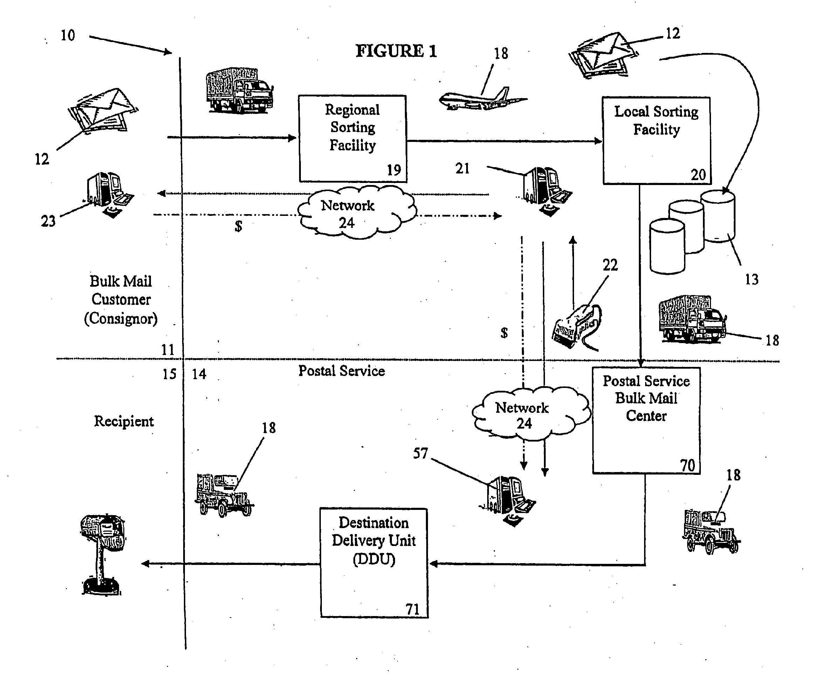

A containerized mail shipping system **10** of one embodiment of the present invention is illustrated in Figures 1-4. Generally, the containerized mail shipping system **10** includes a plurality of delivery vehicles **18**, sorting facilities (such as a regional sorting facility **19** and a local sorting facility **20**), a shipping computer system **21** and a plurality of tracking devices, such as delivery information acquisition devices (DIAD's) **22**.

Together, these various components (and other components as described below) of the containerized mail shipping system **10** record information associated with each of a plurality of mail pieces **12** submitted by a consignor **11**, sort the mail pieces amongst a plurality of containers **13**, deliver the containers to a postal service **14** and obtain tracking information indicating delivery of the containers, as shown in Figure 1. The system **10** can also correlate the tracking information with the sorting information to generate various reports, manifests and bills. Advantageously, the present invention solves the technical problem of how to accurately and efficiently track individual mail pieces even when the mail pieces are inside a container.

It should be noted that in Figure 1 solid lines indicate movement of the mail pieces **12**, dotted lines indicate movement of information and intermittent dashed and dotted lines indicate the movement of funds. Arrows on these lines indicate preferred directions of movement, but other directions may also occur and still be within the scope of the present invention.

The term "container" as used herein includes anything that can hold two or more of the mail pieces **12** and can include small containers such as trays, bags, boxes, cartons, envelopes, cord for tying the mail pieces into a bundle, etc., or large containers such as igloos, rail cars and trailers.

Preferably, the mail pieces delivered by the system **10** are flat mail pieces that are readily scanned to obtain delivery information and readily sorted at a relatively high throughput. However, other types of mail such as irregularly shaped mail, packages and mixtures of the same can also be sorted, containerized, delivered, tracked, etc., by the containerized mail shipping system.

The term "consignor" as used herein describes any person, firm or other entity that is submitting one or more packages, letters or other type of mail pieces **12** for at least partial delivery by the containerized mail shipping system **10**. More than one consignor can be served by the containerized mail shipping system, but a single consignor is shown in Figure **1** for simplicity. Preferably, the consignor **11** is submitting unsorted, or partially sorted, mail pieces 12 for further sorting by the containerized mail shipping system **10** in an effort to garner discounted rates by the postal service **14**. However, the containerized mail shipping system **10** could also be employed to merely more efficiently deliver the mail pieces **12** in the containers . **13** to other private carriers or directly to the intended recipient. Therefore, the term "recipient" as used herein is also to be broadly construed and includes any person, firm or other entity receiving the mail pieces **12**.

The consignor **11** may have its own computer system **23** that is connected via a network **24** to the shipping computer system **21**, as is shown in Figure 1. The consignor computer system **23** is configured to interact with the shipping computer system **21** to electronically send and receive information on the mail pieces **12**. For instance, the shipping computer system can provide tracking information evidencing delivery of the mail pieces to the postal service **14**, electronic copies of manifests, bills, reports and other documents associated with the mail pieces, as will be described below. In one option, the consignor computer system **23** can partially perform some of the tasks of the containerized mail shipping system (such as scanning of the mail pieces **12**) and forward this information via the network **24** to the shipping computer system **21**.

It should be noted that the term "network" as used herein should be construed broadly to include all types of electronically assisted communication such as wireless networks, local area networks, public networks such as the Internet, public telephone networks, or various combinations of different networks.

Mail pieces **12** that originate at the consignor **11** are delivered by one or more delivery vehicles **18** to the regional sorting,facility **19**. These delivery vehicles can include various aircraft, trucks, carts, railroads, conveyors, or any other manual or automatic system or device for transporting the mail pieces **12**. The delivery vehicles **18** can be owned and operated by the carrier having the shipping computer system **21**, or can be the vehicles of contract carriers hired for particular deliveries and routes, or the delivery vehicles **18** could also be controlled or operated wholly, or partially by the consignor **11**. For instance, the initial delivery by the vehicles **18** of the mail pieces **12** to the regional sorting facility **19** may be performed by a truck of the consignor **11**.

The mail pieces **12** shipped to the regional sorting facility **19** are typically unsorted at their arrival at the regional sorting facility. The regional sorting facility is preferably located within a relatively short ground-transportation distance from the consignor **11**. The regional sorting facility **19** sorts the mail pieces **12** using a delivery address of each of the mail pieces wherein the delivery address includes a zip code. In particular, the mail pieces are sorted into a plurality of groups based on the zip code of each of the pieces.

Generally, the mail pieces are sorted into groups that correspond to locations that are closer to the final delivery address, i.e., "local" locations, such as the metropolitan area within which falls the delivery address. Sorting of the mail pieces **12** at the regional sorting facility **19** can be manual or automatic and the operation of such facilities is generally known, and is therefore not described herein in any further detail. In addition, as described below, pre-sorting prior to sorting the mail pieces into the containers **13** for tracking is preferred but not necessary for the present invention. In another option, presorting may be performed by the consignor **11** allowing shipment of the mail pieces **12** directly to the local sorting facility **20**.

The groups of the mail pieces **12**, subsequent to the regional sorting, are delivered by one or more delivery vehicles **18** to the local sorting facility **20**. Due to the generally larger distances of such deliveries, air transport delivery vehicles are often employed. Of course in cases where the local sorting facility **20** is relatively close, or the same as, the regional sorting facility (e.g., wherein delivery from and to the same zip code .by the consignor **11** is desired) ground transport, carts, conveyors and other short distance delivery vehicles **18** may be employed.

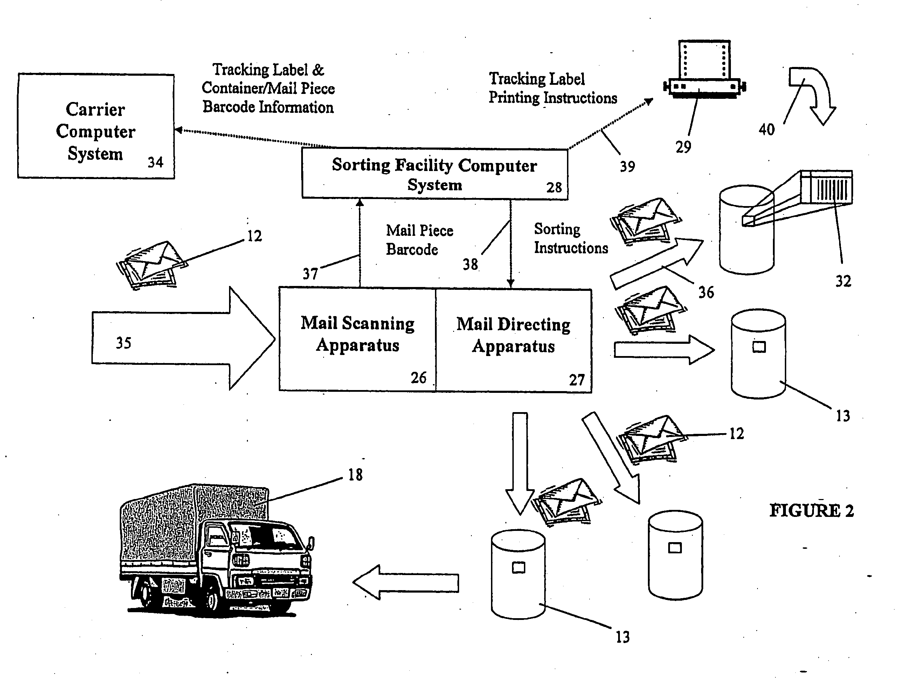

Referring now to Figure 2, the local sorting facility includes a mail scanning apparatus **26**, a mail directing apparatus **27**, a sorting facility computer system **28** and a label printer **29**. The sorting facility computer system **28** is part of the shipping computer system **21**, includes a sorting apparatus controller **41**, and is connected in communication, such as via a local area network (not shown), with the mail scanning apparatus **26**. The mail scanning apparatus is configured to optically scan, or otherwise electronically obtain, information printed on each of the mail pieces. For instance, if the information is a printed address, including a zip code, the mail scanning apparatus **26** may be configured for optical character recognition (OCR) wherein the image of the printed characters is captured and processed to determine the individual characters. For information in a more machine-friendly format, such as a linear barcode, a two-dimensional maxi-code symbol or a multi-stacked bar code, the mail scanning apparatus may include a laser scanner configured to convert the images into one or more reference numbers or strings associated with mail piece information submitted to the containerized mail shipping system **10** by the consignor **11**, as will be described in more detail below.

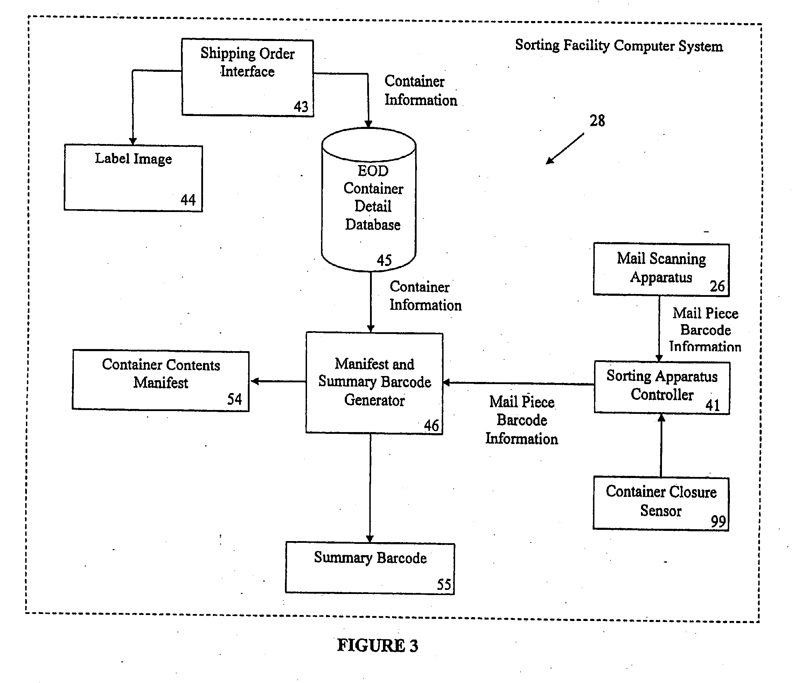

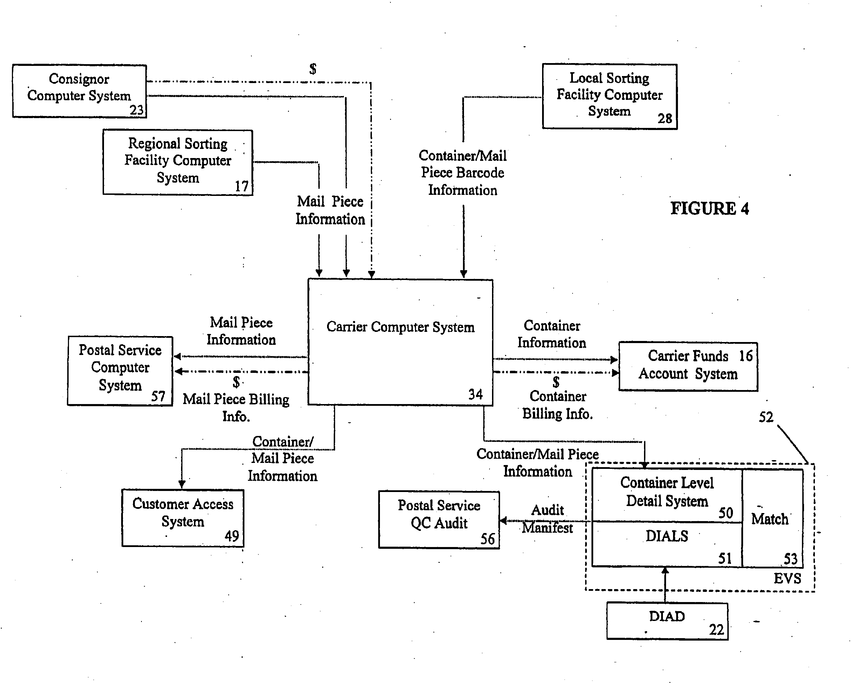

Preferably, however, each of the mail pieces **12** includes a machine-readable linear barcode that reflects a standard of the postal service and includes information on the zip code of the destination of the mail piece. The barcode information associated with each of the mail pieces can then be uploaded to the sorting apparatus controller **41**, as shown in Figure 3. The barcode (and its associated reference string) may also be used to retrieve more detailed information associated with each of the mail pieces that was submitted by the consignor computer system **23** to the sorting facility computer system **28** or a carrier computer system **34**, or that was detected at the regional sorting facility 19 during the pre-sort, as shown in Figure 4. Such mail piece information may include the full delivery address, the name of the recipient **15**, the weight of the mail piece, amount of postage or other payment submitted with the mail piece, its mail classification and an indication of its contents, or other information used to facilitate containerizing, tracking and billing.

It should be noted that other printed and non-printed information associated with the mail pieces **12** could also be automatically obtained from each of the mail pieces, such as a complete address marked on each of the mail pieces. If detailed enough, this information may obviate the need for obtaining information associated with the mail pieces from the regional sorting facility **19**, or from the consignor computer system **23**. As another alternative, obtaining the zip code, which may be part of the reference string associated with the barcode, or some other indication sufficient enough to allow sorting of the mail pieces **12** into the bins (e.g., a destination city).

The sorting facility computer system **28** is also connected in communication with the mail directing apparatus **27**. In particular, the sorting apparatus controller **41** of the sorting facility computer system **28** is configured to process the information from the mail scanning apparatus **26** into sorting commands and communicate the sorting commands to the mail directing apparatus **27** so as to direct each of the mail pieces to its appropriate one of the containers **13**. For instance, the zip code of the mail piece could be extracted from the barcode on each of the mail pieces **12**. and used to direct the mail piece to one of the containers **13** designated for that zip code via a conveyor belt or other apparatus.

The sorting apparatus controller **41** can determine the contents of each of the containers **13** by tracking the mail pieces **13** directed to the container before the container is removed and replaced by another container. Closure of the containers **13** is typically indicated by a container closure sensor **99** that is connected in communication with the sorting apparatus controller **41** and "pings," or otherwise signals, the controller when the container has been closed and removed.

A buffer of the mail directing apparatus **27** allows 10 to 15 seconds for replacement with the new container. During this time, some of the mail pieces directed to the chute that leads to the container associated with a selected destination zip code will be sent to a rejection bin. These rejected mail pieces are then reloaded for sorting and the scanned information associated with these mail pieces cancelled in the database associated with the mail scanning apparatus **26**. Once one of the containers **13** is removed, the sorting facility person logs onto a shipping order interface **43** of the sorting facility computer system **28** to prepare the container for shipment, including creation of a tracking label for each of the containers, as shown in Figure 3 and as described in further detail below.

Further connected in communication with the sorting facility computer system **28** is the label printer **29**, as shown in Figure 2. This allows the sorting facility computer system **28** to communicate a tracking label image to the label printer **29** for printing as a container tracking label **32** and fixation to one of the containers **13** after entry of the container into the shipping order interface **43.** Communication of the sorting facility computer system **28** with the label printer **29** begins with entry of shipping information associated with the container into the shipping order interface **43,** as will be further described below.

The tracking label **32** preferably includes a container identifier and shipping information associated with the container. The shipping information, for instance, may include a human-readable postal service location address to which the container is to be delivered for release of the mail pieces **12.** The identifier preferably includes a unique alphanumeric string that identifies the container, such as a randomly generated 1Z tracking number having a format similar to the following "1Z 510 20T OL 9501 9216." Beneath the tracking number is preferably a tracking number barcode (which is also part of the identifier) that is a coded version of the tracking number and facilitates automated scanning of the tracking number. It should be noted, however, that other types of machine and human-readable identifiers which are currently available, or may become available in the future, may be employed and still be within the scope of the present invention, such as a maxi-code or stacked barcode that are easily machine detectable and relatively information dense.

It should be noted that the depictions of the mail scanning apparatus **26,** the mail directing apparatus **27,** the sorting facility computer system **28** and the label printer **29** are symbolic. Each of these components can comprise one or more devices and/or systems, such as collections and portions of various devices, computer hardware, software, firm-ware, interconnecting networks, etc., that are capable of performing the functions described herein. In addition, some aspects of the sorting occurring in the local sorting facility **20** may be performed manually, such as directing mail flows to different ones of the containers **13** under the control and direction of the sorting facility computer system **28.**

In addition, each of the components need not be discrete in that their functions may overlap or contribute to each other. For instance, the sorting facility computer system **28** may include hardware and software associated with the label printer **29** that is physically separate from a server which contains a processor for manipulating data associated with the address information. Similarly, hardware and software resident on the mail scanning apparatus **26** may process and correlate the scanned mail piece information with the container identifiers. More specific details on the mechanical operation of the scanning apparatus **26,** the directing apparatus **27** and the label printer **29** are not included herein being known to those of skill in the art.

Optionally, in lieu of the label printer **29,** the containers **13** may be marked or labeled in other ways, such as being directly printed on with a barcode or tagged with a radio-frequency identification (RFID) tag that can be detected by scanning devices (such as the DIAD's **22**) which in this aspect would include RFID tag readers, each with an antenna, transceiver and decoder, positioned along the delivery route. These RFID tags include circuitry configured to electromagnetically broadcast the identifier in response to being exposed to the electromagnetic field emitted by a reader of the DIAD or other scanning device. Unlike barcodes, this may occur from a distance, at a relatively quick rate (on the order of 100 milliseconds) and without contact, allowing the containers **13** to be detected during unloading from vehicles, or even during passage by in vehicles. Also, the RFID tags may be active tags that can record information from each detecting reader to keep track of their own route, and this information can be uploaded by the final reader to obtain the tracking information indicating the route of the containers. As another option, the containers themselves could be made unique to indicate the container's identity and possibly some common aspect of the mail pieces **12** contained therein, such as by having a color or molded symbol indicating an identity of the container and its need for delivery to a particular zip code.

Sorting and containerizing of the mail pieces **12** occurs in the illustrated embodiment of Figures 1-4 at a single location that is local to the delivery addresses of the mail pieces. However, sorting and containerizing could occur in other locations, including other more distant locations, or in several locations with several steps spread amongst different locations each having portions of the sorting facilities, as long as the mail pieces are sorted amongst the containers **13** in a manner that allows the sorting facility computer system **28** to determine the mail piece information associated with the mail pieces **12** in each of the containers and the containers are marked so as to allow tracking of the containers and the mail pieces associated with the containers. Further, the speed of operation of the mail scanning apparatus **26,** the mail directing apparatus **27,** the sorting facility computer system **28,** the label printer **29,** etc., may be increased (such as by increasing the number of sorting assemblies, printers, etc.) to allow for greater throughput of mail pieces **12** at the local sorting facility **20.**

Referring once again to Figure 2, the flow of mail pieces **12** and information through the local sorting facility **20** is indicated by various arrows. In particular, block arrows indicate flow of physical things such as the mail pieces **12** and the container tracking label **32,** and dotted lines indicate flows of electronic information. Typically, mail pieces **12** are dropped off by the delivery vehicles **18** and are loaded into the mail scanning apparatus **26** in a relatively large volume, as indicated by large block arrow **35.** The mail scanning apparatus **26** scans the mail pieces **12** and the mail directing apparatus **27** diverts the mail pieces in relatively lesser volumes, as indicated by the smaller block arrows **36,** to the containers **13.**

As is described above, the sorting apparatus controller **41** receives the mail piece barcode information (as indicated by the dotted line **37**) and uses it to generate and send sorting instructions (dotted line **38**) to the mail directing apparatus **27.** Also, the sorting facility computer system **28** obtains the identifiers generated by the shipping order interface **43** and sends tracking label printing instructions (dotted line **39**) to the label printer **29.** In turn, the label printer **29** prints the container tracking label **32** which is then affixed (block arrow **40**) to a respective one of the containers **13.** The containers **13** are then loaded into one of the delivery vehicles **18** for shipping to the postal service **14.**

Figure 3 illustrates in greater detail the sorting facility computer system **28** which is preferably a part of the shipping computer system **21.** The sorting facility ' computer system **28** includes the sorting apparatus controller **41,** the shipping order interface **43,** a label image generator **44,** an end-of-day (EOD) container detail database **45** and a summary barcode and manifest generator **46.**

The shipping order interface **43** provides a graphical user interface (GUI) for prompting and recording shipping information for each of the containers **13.** For instance, the shipping order interface **43** may prompt and record input of delivery, and other, information for the containers **13** including a destination address, such as the local delivery facilities of the postal service **14,** at which the mail pieces **12** can be removed from the containers and their delivery to the recipient **15** completed.

The shipping order interface **43** may be configured to facilitate entry of the destination address for the container. For instance, the location of each of the containers **13** and its associated chute on the sorting apparatus may be graphically indicated on a GUI by the shipping order interface. Selection of the appropriate chute and container results in the shipping order interface **43** retrieving the zip code associated with that chute and the bulk mail center **70** associated with that zip code. This information is then used to pre-populate the destination address for the container. The shipping order interface **43** may be further configured to record and associate other information with the container, such as an identity of the consignor and billing information associated with the mail pieces **12.** The shipping order interface **43** also includes logic for generating, selecting from a pre-allocated pool, or otherwise obtaining, an identifier for each of the containers **13.** It should be noted that the shipping order interface **43** may not be entirely resident on the sorting facility computer system **28,** and may be, for instance, generated as a web page using hyper-text markup language, or other GUI, sourced from the carrier computer system **34.**

The label image generator **44** is connected in communication with the shipping order interface **43** and is capable of obtaining the container identifier, destination address and other information for each of the containers **13** from the shipping order interface. The label image generator is configured to generate a label image including the identifier and the destination address for the container, and then send the label image to the label printer **29.** As shown in Figure 2 and as described above, this label image is used to print the tracking label **32** which is then affixed to one of the containers **13.**

Also connected in communication with the shipping order interface **43** is the EOD container detail database **45.** The EOD database is configured to obtain the information associated with each of the containers **13,** e.g., the identifier assigned to each of the containers, the origin and destination addresses of the container and the consignor's identity, from the shipping order interface **43** and has logic for formatting the container shipping information into a spreadsheet, or other organized electronic file, summarizing each day's container shipments. The EOD database **45** also includes data storage capabilities for storing the electronic file of container shipping information.

The sorting apparatus controller **41** is the portion of the sorting facility computer system **28** that is configured to obtain the mail piece barcode from the mail scanning apparatus **26** and to direct the mail pieces to the containers **13** using the zip code, or other information extracted from the barcode, or detected from the mail pieces, as described above in more detail in reference to Figure 2.

Connected in communication with the manifest generator **46** are the EOD database **45** and the sorting apparatus controller **41.** The manifest generator 46 is configured to obtain the container shipping information (including the identifier associated with each of the containers **13**) from the EOD database **45,** or directly from the shipping order interface **43,** as each of the containers is entered into .the shipping order interface **43.** The manifest generator **46** is further configured to obtain, from the sorting apparatus controller **41,** the mail piece information, such as the mail piece barcodes, for each batch of mail pieces **12** sorted into the container and an indication of the chute and location of the container.

This information, along with the timing of its entry, allows the manifest generator to correlate the mail piece barcodes with the container identifier, which is used to generate an electronic container contents manifest **54** describing the mail piece barcode, or other mail piece information, associated with each of the mail pieces **12** in a respective one of the containers **13** and the container shipping information obtained from the shipping order interface **43.** The container contents manifest **54** for each of the containers **13** of an entire shipment or period (e.g., at the end of a day) can then be printed and placed in each of the containers, such as in a pocket on the container. Also, the container contents manifest **54** for each of the containers **13** of a particular consignor **11** can be compiled in a report that is sent, or otherwise made available, to the consignor, along with tracking information obtained from the carrier computer system **34,** as will be described in more detail below.

The manifest generator **46** is also configured to generate a summary barcode image **55** for the container contents manifest **54** that includes additional information on the container, such as a reference number that associates the container with the location of the local sorting facility **20** and a name and number of the consignor **11.** Each summary barcode image **55** may be included on a paper version of the container contents manifest **54** (if a paper version is used) to speed scanning of the manifest by the carrier computer system **34** as the containers **13** are delivered. The summary barcode image **55** could also be associated with electronic versions of the container contents manifest **54.**

Preferably, the container contents manifest **54** sent to the postal service **14** is formatted using a standard acceptable by the postal service for obtaining presorting discounts. For instance, the manifest generator **46** may have logic configured to place the container shipping information into the "8125" type manifest of the U.S. Postal Service for obtaining discounts on presorted mail. Additional details on the 8125 manifest are explained in more detail in commonly assigned U.S. Patent Application No. 60/464,529, filed April 22, 2003.

As is shown in Figure 2, the local sorting facility computer system **28** is connected in communication with the carrier computer system **34,** allowing the carrier computer system to obtain the container shipping and mail piece barcode information correlated by the manifest generator **46.** Referring now to Figure 4, it can be seen that the carrier computer system **34** is also connected in communication with the consignor computer system **23,** a regional sorting facility computer system **17,** a postal service computer system **57,** a customer access system **49,** an electronic verification system (EVS) **52** and a carrier funds account system **16.** As will be described below, these connections allow the carrier computer system **34** to coordinate, in what could be described as a hub-and-spoke system, the flow of shipping, mail piece and tracking information to create manifests, provide access for other parties to the information and control the flow of funds for payment for the shipping services.

The consignor computer system **23** is configured to electronically send mail piece information to the carrier computer system **34.** For instance, the consignor computer system **23** may contain delivery addresses for bulk mail correlated with their barcodes which have been printed on the mail pieces **12** in compliance with postal service rules. In another aspect, the mail pieces may already include the delivery addresses and bar codes and the consignor computer system **23** has scanned the mail pieces to obtain the information. Further, the mail pieces may have been subject to other processing by the consignor to determine additional information for association with the mail piece barcodes, such as weight, size, return address, contents, etc., that can be later used by the rest of the containerized mail shipping system **10.** As another alternative, or in addition to the consignor computer system **23** sending mail piece information, the regional sorting facility computer system **17** may be configured to obtain and send mail piece information to the carrier computer system **34** wherein the mail piece information is obtained during scanning and other processing of the mail pieces **12.**

The consignor computer system **23** may also be configured to send billing and funds transfer information (as represented by the intermittent dashed and dotted line and the "$" sign on Figure 4) to the carrier computer system **34.** The billing information preferably includes instructions for an electronic debit or credit of funds in payment for the services provided by the carrier, including funds for the pre-sorting, containerizing of the mail pieces **12** and delivery of the containers **13,** and funds for the delivery by the postal service **14** of the mail pieces to the recipient **15.** These funds are preferably correlated with the mail piece information, including different characteristics of the mail pieces, such as type of delivery, size, weight and other information that affects the cost of delivery. Therefore, each of the mail pieces **12** would preferably be identified by its barcode which is associated with its mail piece information and cost information.

After receiving the mail piece information and billing information correlated with the mail piece barcodes, and the container information, including container identifier, correlated with the mail piece barcodes, the carrier computer system **34** is configured to associate the mail piece information with the container information using the mail piece barcodes, or identifying information extracted from the mail piece barcodes. In this manner, all of the details about the mail pieces in each of the containers, including delivery address, weight, postage, number of mail pieces, etc., are correlated with the identifier of that container and can be stored and distributed to the other systems by the carrier computer system.

In the embodiment illustrated in Figures 1-4, the carrier computer system **34** is configured to parse, process, and distribute the container, mail piece and billing information to the other connected systems. For example, the carrier computer system is configured to send the container and mail piece information to the electronic verification system **53** and the customer access system **49.** Also, the carrier computer system can send the mail piece information correlated with its mail piece billing information, including any funds or instructions to transfer funds associated with the delivery of the mail pieces **12** for selected time periods or batches of containers, to the postal service computer system, as shown in Figure 4. Similarly, the container information and container billing information, including any funds or instructions to transfer funds for shipment of the containers **13,** can be routed to the carrier funds account system **16.** The postal service computer system **57** and the carrier funds account system **16** can audit, archive, redistributed or perform other types of desired processing on the information sent by the carrier computer system **34.**

The carrier computer system may include logic for calculating the amount of the funds to which the carrier and the postal service are entitled using the container and mail piece information. For instance, the carrier computer system **34** may have logic that determines the number of containers **13** shipped during a day and the number and delivery service type of the mail pieces **12** in each of the day's containers and applies these numbers to agreed-upon shipping rates to determine the fractional distribution of the amount of funds remitted by the consignor computer system **23.**

The electronic verification system **53** preferably includes a delivery information area location system (DLKLS) **51,** a container level detail system **50** and a matching system **53.** The delivery information area location system **51** is connected in communication with one or more of a plurality of tracking devices which together are part of a tracking system for tracking the containers **13.** Each of the tracking devices is preferably positioned, or able to be positioned, at one or more postal service locations, such as at a bulk mail center **70** of the postal service **14,** as shown in Figure 1. When the tracking devices detect one of the containers **13** (e.g., by laser scanning the tracking label **32**) the container identifier and other tracking data, such as the time of scanning and a postal service facility identifier, are sent electronically to the delivery information area location system **51.**

Due to its recent collection, this new tracking system data is classified by the delivery information area location system **51** as "live" tracking data which can, optionally, be sent to archival storage by the delivery information area location system after a period of time, such as 20 days. Preferably, the tracking devices can also be positioned along the delivery path of the containers **13** so as to be capable of obtaining tracking information from a container as it travels through points along its delivery path prior to its arrival at the postal service **14.**

Preferably, the delivery information area location system **51** is connected in communication over one or a number of different types of wireless networks to a tracking device in the form of the DIAD **22** shown in Figure 4. The DIAD **22** is portable and is carried by the delivery driver delivering the package to the bulk mail center **70** of the postal service **14,** or other intermediate physical pickup or delivery location along the path of package travel. The DIAD **22** includes one or more of a wireless wide area network data radio, a wireless local area network data radio or a wireless personal area network data radio. The wireless wide area network radio advantageously allows real-time or near real-time communication as data is entered into the DIAD, without connection to a docking station for recognition of the data by an optical link, as is required by some other types of tracking devices.

The DIAD also preferably includes a barcode scanner (such as a laser scanner), a signature capture window and a global positioning sensor (GPS). The barcode scanner is configured for reading the identifier barcode on the container tracking label **32** to register detection of the container label. The GPS provides time, date, latitude, longitude and other position-based information that is then associated with the identifier of the container tracking label **32.** Notably, this information may also be used to determine if the delivery was close to the actual, correct bulk mail center **70** location. The signature capture window (not shown) is capable of electronically capturing writing by a stylus on a touch-sensitive screen. This window is used to collect a signature at the bulk mail center acknowledging receipt of the containers **13** in a particular delivery. As will be noted below, the DIAD may also be configured to download the container contents manifest **54** for each of the containers **13** at the time of their release to the bulk mail center **70.**

It should be noted that other types of scanning device, other than the laser scanner of the DIAD described above, may be employed to detect the identifiers on the containers **13** and still be within the scope of the present invention. For instance, the identifiers could be detected using a CCD camera that records a digital image of the identifier and then uses optical character recognition to determine an identifier in the form of an alphanumeric string (such as the 1Z tracking number shown above). Alternatively, the CCD camera may process the image of a machine-readable, encoded version of the identifier (such as a barcode, stacked barcode, 2D maxi-code, etc.) which it looks up from an associated database or applies a standard translation algorithm to decode the encoded symbol or string.

As another option, the DIAD **22** may include an RFID tag reader that includes a transceiver and antenna that emit an electromagnetic pulse or field to which the RFID tag is responsive (i.e., a transponder) with its own signal that is captured and decoded into a tracking number or string. Regardless, the identifier in some encoded, decoded or partially decoded form is captured from the container and is transmitted via a network to the delivery information area location system **51** for additional processing and use as an electronic key by other parts of the system **10** to locate the container and mail piece information associated with the identifier.

The container level detail system **50** is configured to collect the container and mail piece information as it is received from the carrier computer system **34.** Similar to the delivery information area location system **51,** the container level detail system is preferably a "live" system that retains the container and mail piece information for a period of time (e.g., 20 days) before being sent to archival storage. Regardless, the matching system **53** is configured via matching logic to combine the tracking information with the container and mail piece information into an audit manifest, as shown in Figure 4. The matching logic correlates the container identifier detected by the DIAD's **22** and supplied by the DIALS **51** with the same container identifier associated with the container and mail piece information from the carrier computer system **34.**

This information can then be organized by the verification system **52** into the audit manifest which is preferably grouped by container. For instance, the audit manifest may be a single electronic file listing the identifiers of all of the containers **13** shipped during a day (e.g., every day at 8 PM) by the carrier. The identifier of each of the containers would have listed therewith its container information, tracking information indicating detection of delivery of the container at the bulk mail center **70** and the barcodes of the mail pieces in that container. In turn, each of the mail piece barcodes would have listed therewith the associated mail piece information and billing information. The billing information may also be configured into summary billing information, including container and mail piece payment totals for the entire day. Variations of the organization of the audit manifest are possible and typically will depend upon the format desired or needed by a postal service quality control (QC) audit system **56** which receives the audit manifest.

The QC system is preferably capable of performing multiple closed-loop audits and quality control checks for the containerized mail shipping system **10** using the audit manifest to ensure proper tracking, delivery and payment for delivery of the mail pieces **12.** These quality control processes include, for example, matching of the mail piece barcodes later scanned by the postal service equipment at the bulk mail center **70** with the mail piece barcodes listed in the audit manifest. Also, the QC system **56** may be capable of doing periodic weight, number and delivery class checks against the audit manifest to ensure accuracy. As another option, the QC system may be capable of comparing the mail piece information in the audit manifest with mail piece information obtained from the consignor **11,** such as from the consignor computer system **23,** to ensure that all of the mail pieces submitted were billed for and delivered.

Other aspects of the containerized mail shipping system **10** can be used to facilitate additional quality control checks and audits. For instance, the containers **13** detected by the delivery information area location system **51** can be compared to the containers listed on the EOD database **45** to ensure that all of the containers were delivered to the postal service location. In yet another option, the container contents manifest **54** for each of the containers **13** may be downloaded by one of the DIAD's **22** at the bulk mail center **70.**

In this aspect, the containers **13** in the shipment are easily identified by scanning information on the tracking label **32** of each of the containers. As each tracking label **32** is scanned its barcode is decoded into the container identifier which is sent to the DIALS **51.** The DIALS obtains the container contents manifest **54** corresponding to the container identifier from the container detail system **50** and sends the container contents manifest back over the network to the DIAD so that it can be displayed on the DIAD screen. The container contents manifest **54** can then be checked against the actual container contents by the personnel at the bulk mail center **70** prior to signing the DIAD.

In an aspect wherein the DIAD **22** is an RFID reader, an active tag could be used on the container which has stored in its memory the container contents manifest **54** which can be read by the RFID reader. This information could then be uploaded to the postal service computer system **57,** or displayed similar on the DIAD, for confirmation of the contents of the container and signature by the bulk mail center personnel.

Additional details of the QC systems described above, and other QC systems that can be integrated with or layered onto the containerized shipping system **10** of the present invention are described below in reference to a combined shipping system **310** of another embodiment of the present invention.

Referring again to Figure 4, the customer access system **49** receives the container and mail piece information from the carrier computer system **34,** and could optionally receive the billing information from the carrier computer system and the container tracking information from the delivery information area location system **51.** Generally, the customer access system **49** is configured to provide access to the various parties involved in the transaction for shipping the mail pieces **12,** including the consignor **11** and the recipient **15.** For example, progress of delivery of the mail pieces **12** could be indicated by tracking information showing the progress of delivery of one of the containers **13** and an associated list of the barcodes of the particular mail pieces in the container.

The postal service preferably includes the above-described bulk mail center **70,** a destination delivery unit (DDU) **71** and its own delivery vehicles **18.** The bulk mail center **70** is capable of taking the presorted mail pieces **12** delivered by the containerized mail delivery system **10** and further sorting the mail pieces into groups for delivery to one or more destination delivery units. The destination delivery unit is an even more local facility (e.g., such as a local post office) than the bulk mail center **70** and is typically the final stop before delivery of the mail pieces **12** to the recipient(s) **15.** However, the containerized mail delivery system **10** of the present invention may also be capable of delivering mail pieces **12** in the containers **13** directly to the destination delivery unit **71** with the appropriate amount of sorting.

It should also be noted that the containerized mail delivery system **10** can deliver the packages to other, intermediate parties that are not a postal service, to its own sorting facilities, or even directly to the recipient **15,** as long as the mail pieces **12** in each of the containers **13** are identified, associated with the container and delivery of the container is tracked. Therefore, the term "consignee" is used herein to designate the potential range of recipients of the mail pieces **12** delivered in the containers **13** by the containerized mail shipping system **10** of the present invention.

During operation of the containerized mail shipping system **10** of the embodiment of the present invention illustrated in Figures 1-4, the mail pieces **12** are submitted by the consignor **11** to the delivery vehicle **18** which carries the mail in an unsorted condition to the regional sorting facility **19,** as shown in Figure 1. At the regional sorting facility **19,** a rough sort of the mail pieces **12** is performed to identify mail pieces directed to a particular region served by the local sorting facility **20.** These mail pieces are then sent via additional delivery vehicles **18** (such as via air transport) to the local sorting facility **20.**

At the local sorting facility, the mail pieces **12** are scanned, sorted and containerized, as shown in Figure 2. During this process, the sorting apparatus controller **41** records the mail piece information, including the barcode of each of the mail pieces **12,** by scanning the mail pieces and then directs sorting of the mail pieces amongst the containers **13.** As the mail pieces **12** are sorted, the sorting apparatus controller **41** records the container into which each of the mail pieces are sorted based on the scanned information. In addition, each of the containers **13** has its shipping information entered into the shipping order interface **43,** as shown in Figure 3.

The shipping order interface generates or obtains an identifier for each of the containers **13** and sends the container shipping information associated with the container identifiers to the EOD database **45,** the manifest generator **46** and the label generator **44.** The label generator **44** uses the container shipping information and the identifier to generate and print the container tracking label **32** for each of the containers **13.** The container tracking labels are then affixed to the containers, as shown in Figure 2.

Referring again to Figure 3, the manifest generator **46** obtains the mail piece barcodes associated with each of the container identifiers from the sorting apparatus controller **41** and the container shipping information from the EOD database **45.** The manifest generator **46** creates the container contents manifest **54** by correlating the mail piece information (e.g., the mail piece barcodes) with the container shipping information, including the identifiers of the containers. Also, the manifest generator **46** creates the summary barcode **55** that describes certain aspects of the container, including its origin, destination and the consignor identity. The container contents manifest **54** and summary barcode **55** are printed on a paper manifest for shipping with the container and the electronic data is otherwise made available to the carrier computer system **34.**

At the end of a day, the carrier computer system **34** obtains the remaining mail piece information and the billing information from the consignor computer system **23** and uses the barcodes of the mail pieces **12** to combine the mail piece information and the billing information with the container information. The carrier computer system **34** then determines the amount of funds due for delivery of the containers by the carrier and forwards the container information and container billing information. (such as an electronic credit of funds) to the carrier funds account system **16.** Also, the carrier computer system determines the amount of funds due for delivery of the day's mail pieces **12** and forwards the mail piece information and mail piece billing information (such as an electronic credit of funds) to the postal service computer system **57.**

The containers **13** are picked up by delivery vehicles **18** for delivery to the postal service bulk mail center **70** and are unloaded at the bulk mail center, as shown in Figure 1. As each container is unloaded, its tracking label **32** is scanned with the DIAD **22** or other tracking device, which identifies the container and optionally downloads the container contents manifest **54** onto the DIAD for reviewing and signing by a postal service person.

The delivery information area location system **51** obtains the tracking information from the DIAD **22** indicating delivery of the containers **13,** including the identifier, time and date associated with detection of the containers, as well as the location of the containers and the signature of the postal service person. The container level detail system **50** obtains (or already has) the container and mail piece information, including the mail piece information associated with each of the container identifiers. As each container identifier is detected and the matching system obtains and matches the container information and the mail piece information with the tracking information using the container identifier. If the option of downloading the container contents manifest **54** is used, the matched mail piece information associated with the container identifier is sent to DIALS for download to the DIAD.

The mail pieces **12** are then further sorted by the postal service **14** at the bulk mail center **70** and loaded onto delivery vehicles **18.** The delivery vehicles deliver the mail pieces **12** to the destination delivery unit **71** for final sorting and delivery by further vehicles to the recipient **15.** At the end of a day, or other suitable time period, the electronic verification system **52** uploads and correlates container contents manifest information, container tracking information and mail piece information for the various quality control checks and audits described above. Also, this information is made available to the other parties in various billing manifests for electronic payment and auditing, as also described above.

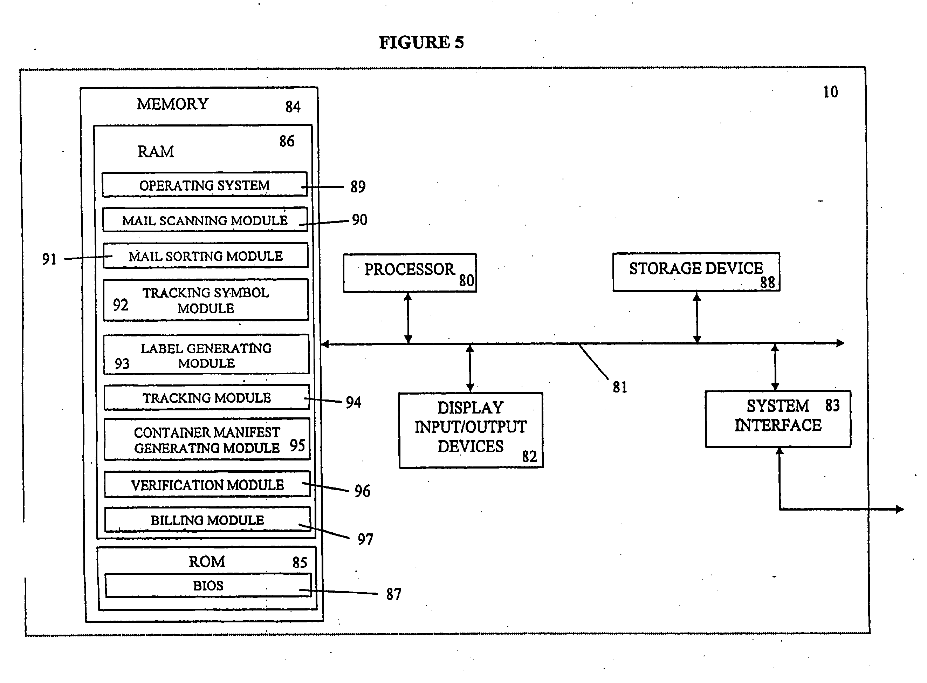

An alternative embodiment of the shipping computer system **21** of the present invention is shown schematically in Figure 5. The shipping computer system includes a processor **80** that communicates with other elements within the computer system **21** via a bus **81.** Also included in the shipping computer system **22** are input and output devices **82,** including the DIADs used for tracking and various terminals for receiving and displaying data within the system. The shipping computer system **22** further includes memory **84,** which preferably includes both read only memory (ROM) 85 and random access memory (RAM) **86.** The ROM **85** is used to store a basic input/output system (BIOS) **87** containing the basic routines that help to transfer information between elements within the shipping computer system **21.** A system interface **83** enables communication with other computer systems, such as the consignor computer system **23** and the carrier computer system **34.**

In addition, the shipping computer system **21** includes at least one storage device **88,** such as a hard disk drive, a floppy disk drive, a CD-ROM drive, or optical disk drive, for storing information on various computer-readable media, such as a hard disk, a removable magnetic disk, or a CD-ROM disk. As will be appreciated by one of ordinary skill in the art, each of these storage devices **88** is connected to the system bus by an appropriate interface. The storage devices **88** and their associated computer-readable media provide non-volatile storage for the shipping computer system **22.** It is important to note that the computer-readable media described above could be replaced by any other type of computer-readable media known in the art. Such media include, for example, magnetic cassettes, flash memory cards, digital video disks, and Bernoulli cartridges.

A number of program modules may be stored by the various storage devices, such as within RAM 86 (as shown in Figure 5) or within the storage device **88** (as not shown for clarity). Such program modules include an operating system **89,** a mail scanning module **90,** a mail sorting module **91,** an identification generator module **92,** a label generating module **93,** a tracking module **94,** a manifest generating module **95,** a verification module **96** and a billing module **97.** As described both above and below, the mail scanning and sorting modules **90, 91** control the scanning and directing apparatuses **26, 27,** collecting mail piece information and sorting the mail pieces **12** amongst appropriate ones of the containers **13.** The identification generator module **92** generates identifiers for the container labels, images of which are generated by the label generating module **93.** The tracking module **94** collects tracking information on the movement of the containers **13.** The manifest generating module **95** collects and correlates the mail piece information and container information to create the container contents manifest **54.** The verification module **96** obtains the tracking information, container information and mail piece information and constructs an audit manifest. The billing module **97** calculates the cost of the various sorting and shipping services and allocates any funds submitted by the consignee accordingly.

It will be appreciated by one of ordinary skill in the art that one or more of the components of the computer systems described herein may be located geographically remotely from other components. Furthermore, one or more of the components may be combined, and additional components performing the functions described herein may be included in the consignor and postal service computer systems **23, 57.**

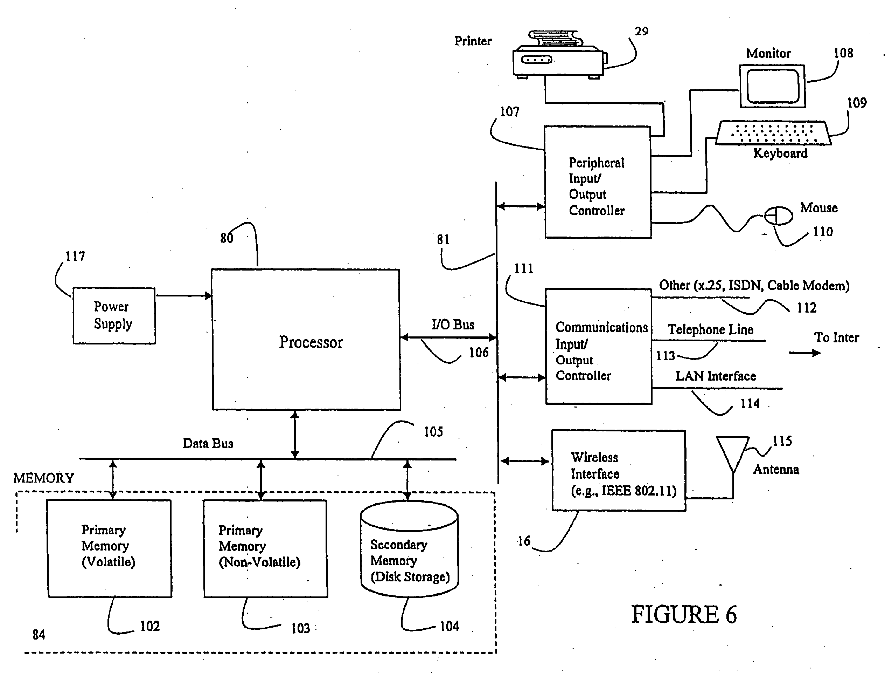

For example, one embodiment of a computer of the containerized mail shipping system **10** is illustrated that can be used to practice aspects of the present invention. In Figure 6, the processor **80,** such as a microprocessor, is used to execute software instructions for carrying out the above-defined steps and functions, such as sorting, scanning, identification generation, manifest generation, etc. The processor receives power from a power supply **117** that also provides power to the other components as necessary. The processor **80** communicates using the data bus **81** that is typically 16 or 32 bits wide (e.g., in parallel). The data bus **81** is used to convey data and program instructions, typically, between the processor and memory. In the present embodiment, memory can be considered primary memory **86** that is RAM or other forms which retain the contents only during operation, or it may be non-volatile **85,** such as ROM, EPROM, EEPROM, FLASH, or other types of memory that retain the memory contents at all times. The memory could also be secondary memory **104,** such as disk storage, that stores large amount of data. In some embodiments, the disk storage may communicate with the processor using an I/O bus **106** instead or a dedicated bus (not shown). The secondary memory may be a floppy disk, hard disk, compact disk, DVD, or any other type of mass storage type known to those skilled in the computer arts.

The processor **80** also communicates with various peripherals or external devices using an I/O bus **106.** In the present embodiment, a peripheral I/O controller **107** is used to provide standard interfaces, such as RS-232, RS422, DIN, USB, or other interfaces as appropriate to interface various input/output devices. Typical input/output devices include local printers, such as the label printer **29,** a monitor **108,** a keyboard **109,** and a mouse **110** or other typical pointing devices (e.g., rollerball, trackpad, joystick, etc.).

The processor **80** typically also communicates using a communications I/O controller **111** with external communication networks, and may use a variety of interfaces such as data communication oriented protocols **112** such as X.25, ISDN, DSL, cable modems, etc. The communications controller **111** may also incorporate a modem (not shown) for interfacing and communicating with a standard telephone line **113.** Finally, the communications I/O controller may incorporate an Ethernet interface **114** for communicating over a LAN. Any of these interfaces may be used to access the Internet, intranets, LANs, or other data communication facilitites.

Finally, the processor **80** may communicate with a wireless interface **116** that is operatively connected to an antenna **115** for communicating wirelessly with another devices, using for example, one of the IEEE 802.11 protocols, 802.15.4 protocol, or a standard 3G wireless telecommunications protocols, such as CDMA2000 1x EV-DO, GPRS, W-CDMA, or other protocol.

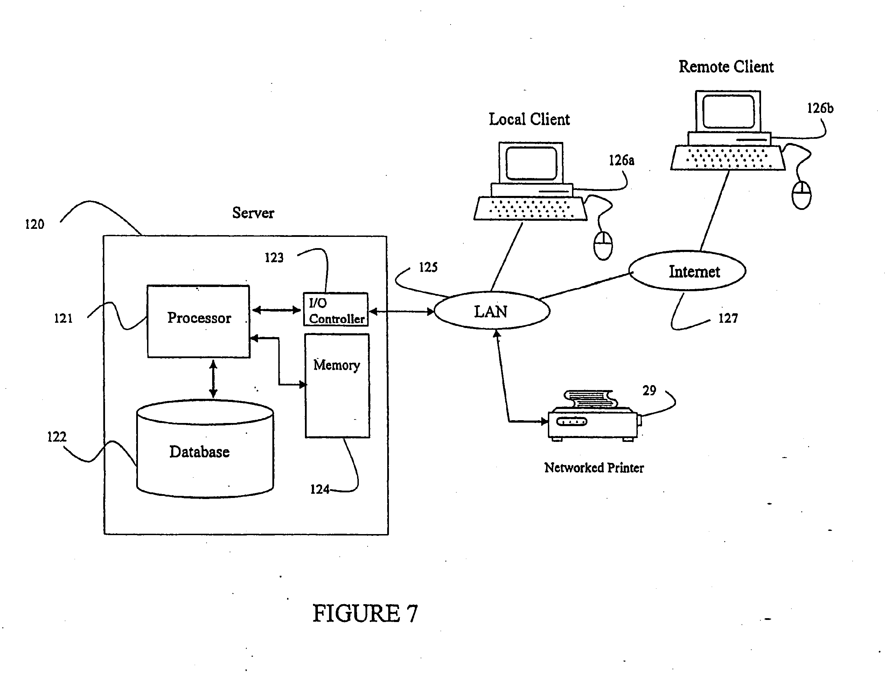

An alternative embodiment of a processing system of the containerized mail shipping system **10** than may be used is shown in Figure 7. In this embodiment, a distributed communication and processing architecture is shown involving a server **120** communicating with either a local client computer **126a,** such as a computer displaying GUIs associated with the shipping order interface **43** and connected to the sorting facility system **28,** or a remote client computer **126b,** such as the consignor computer system **23** or the postal service computer **57.** The server **120** typically comprises a processor **121** that communicates with a database **122,** which can be viewed as a form of secondary memory, as well as primary memory **124.** The processor also communicates with external devices using an I/O controller **123** that typically interfaces with a LAN **125.** The LAN may provide local connectivity to a networked printer, such as the label printer **29,** and the local client computer **126a.** These may be located in the same facility as the server, though not necessarily in the same room. Communication with remote devices typically is accomplished by routing data from the LAN **125** over a communications facility to the Internet **127.** The remote client computer **126b** may execute a web browser, so that the remote client **126b** may interact with the server as required by transmitted data through the Internet **127,** over the LAN **125,** and to the server **120.** For instance, the server **120** may be part of the shipping computer system **21** that is configured to operate as the customer access system **49** and receive requests from the consignor computer system **13** (which is a type of remote client computer **126b**) or the postal service computer system **57** (which is also a type of remote client computer **126b**) for various data, such as the container and audit manifests.

Those skilled in the art of data networking will realize that many other alternatives and architectures are possible and can be used to practice the principles of the present invention. The embodiments illustrated in Figure 6 and 7 can be modified in different ways and be within the scope of the present invention as claimed.

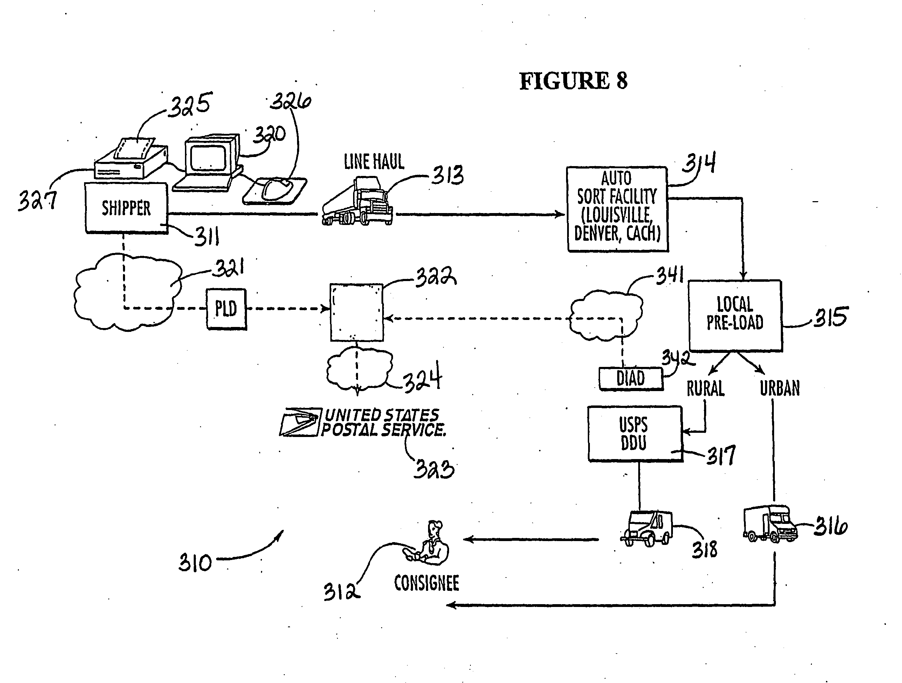

In other embodiments, the containerized mail shipping system **10** of the present invention can be employed with, or have selected incorporated aspects and functions of, the system **310** for combining the shipping services of multiple carriers, as shown in Figures 8-20. For example, as shown in Figure 8, the combined shipping system ships packages (used herein to refer to any item being delivered, for example, parcels or mail, such as the mail pieces **12** or the containers **13** described above), from a shipper **311** to a consignee or recipient **312.**

In one exemplary embodiment, the containerized shipping system **10** may be used to deliver the packages of the combined shipping system **310** in the containers **13,** wherein the first carrier operates the containerized mail shipping system **10** and uses it to track and manifest deliveries to the second carrier (in this case the postal service **14**) which completes deliveries of the packages to the recipient **15** (which, in this instance, is analogous to the consignee **312**). In an alternative embodiment, the combined shipping system **310** can be used to coordinate the efforts of multiple carriers to deliver the containers **13** from the consignor **11** to the postal service **14** (wherein the postal service **14** is analogous to the consignee **312**). Of course other combinations of the various aspects are possible and still within the scope of the present invention. To this end, some, but not all, analogous aspects of the containerized mail shipping system **10** and the combined shipping system **310** have been identified herein. The term "analogous" as used herein is not intended to indicate identical function or structure of the systems, but to indicate possible instances of overlapping structure or function wherein the two systems may be combined, exchanged, overlaid or are otherwise complementary or similar

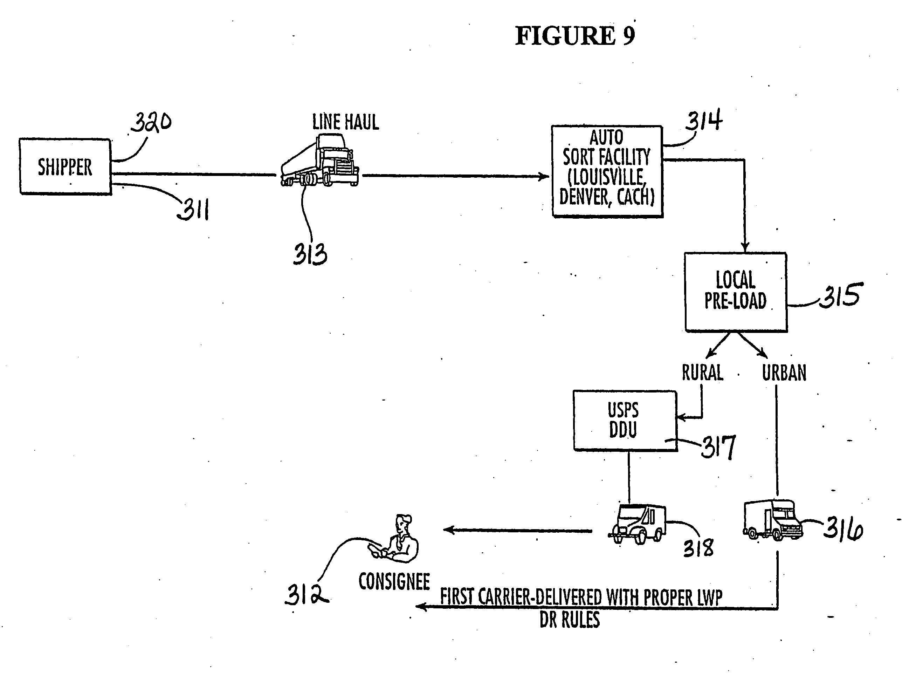

The combined shipping system **310** has a variety of physical facilities for facilitating delivery of packages (movement of which is indicated by the solid lines), including line haulers **313** (analogous to delivery vehicles **18**), a sorting hub **314** (analogous to regional and local sorting facilities **19, 20**), a preload facility 315 (analogous to the bulk mail center **70**) and carrier delivery facilities (vehicles, personnel, etc.) **316,** each of which are preferably operated by a first carrier, as shown in Figure 9. A second carrier (e.g., the USPS), operates its own destination delivery unit **317** and carrier delivery facilities **318** (analogous to the bulk mail center **70**), which in the case of the USPS are local post offices and mail delivery personnel, vehicles, etc. The conventional operation of such USPS systems is well known.

Referring again to Figure 8, the combined shipping system **310** also includes a variety of communications systems that are preferably electronic in nature. The communication systems include a shipper computer system **320** (analogous to consignor computer system **23**) connected electronically via a network **321** to a first carrier computer system **322** (analogous to the carrier computer system **34**) and a second carrier computer system **323** (which may be analogous to the carrier computer system **34** and/or the postal service computer system **57**). The first and second carrier computer systems **322, 323** are also connected via a network **324.** Generally, the communication systems allow the efforts of the physical facilities of the two carriers and the shipper **311** to be coordinated for efficient delivery of (and billing for delivery of) the packages.

Information (movement of which is indicated by the dashed lines) conveyed through the communication systems includes package information, e.g., package level details (PLD) such as an origin, destination and weight of each of the packages, which facilitates sorting and delivery of the packages and billing for the delivery services. In addition, the communication systems collect, record and report tracking information to the carriers, the shipper **311,** the recipient **312** and any other interested parties.

The shipper **311** can be a retail shipping outlet, a business shipping a high volume of packages, or any other person or entity wishing to ship packages using the combined shipping system **310.** In one aspect, the shipper **311** may agree to perform limited pre-processing activities in the combined shipping system **310,** such as those described below which are facilitated by use of the computer system **320,** in communication with the first carrier computer system **322.**

The shipper's computer system **320** has software distributed by the first carrier making it configured to record the PLD information necessary to sort, meter and ship each of the packages. In one example, the computer system **320** of the shipper **311** is connectable over the network **321** to a web server of the first carrier computer system **322.** The web server of the first carrier computer system is configured to send data across the network to display web pages on the shipper computer system **320.** Alternatively, the shipper **311** could be directly equipped with software downloaded from the first carrier computer system **322,** or sent on media by the first carrier for installation on the shipper computer system **320.**

Preferably, package aggregation will be disabled for the PLD upload (i.e., each package will be registered as a single shipment) so that the carrier is not accountable for delivering all of the packages together. Also preferably, PLD information is uploaded daily, or even multiple times per day, as trailers are closed for pickup by the line hauler **313.** Retransmission may be performed to ensure that all of the PLD information has been uploaded. The PLD information can also be provided in printed form as a manifest, including a summary of barcodes of the packages on the trailer, to the pickup driver of the line hauler.

Regardless of the source of the software, the computer system **320** preferably includes software logic for processing all types of parcels according to zip code, weight and tracking number. In addition, the shipper computer system may also include rate information that can be updated periodically by the carrier computer systems **322, 323** via the networks **321, 324;** or by other data input or transfer. Further, the shipper computer system **320** may include a database of zip codes separated into groups or indexed by population density, which preferably distinguishes urban and rural destinations. Other software logic may be configured to obtain, or generate, tracking numbers for the packages for both carriers. Rate, zip code, DDU location and other information is preferably updated on a regular basis (e.g., quarterly) to reflect current information and changes thereto.

Using the software logic, the shipper computer system **320** is configured to prompt and record entry of the PLD shipping information by the shipper **311,** such as through the presentation of a graphical-user interface with fields for entry of the PLD information. To facilitate accurate recording of package weights, the computer system **320** may include a scale **326.** In addition to the scale **326,** the shipper's computer system **320** may also include a label printing device **327** (analogous to the label printer **29**) or other type of printer. Once the PLD. information has been entered or recorded, the logic of the computer system **320** is configured to use the database of zip codes to match the package zip code with a classification of the package's destination address, which in the illustrated embodiment of Figure 8 includes the rural or urban classification. In addition to classifying the destination address, the shipper computer system **320** may also have logic and data for determining the destination delivery unit **317** of the second carrier, which corresponds to the recipient's address, if necessary.

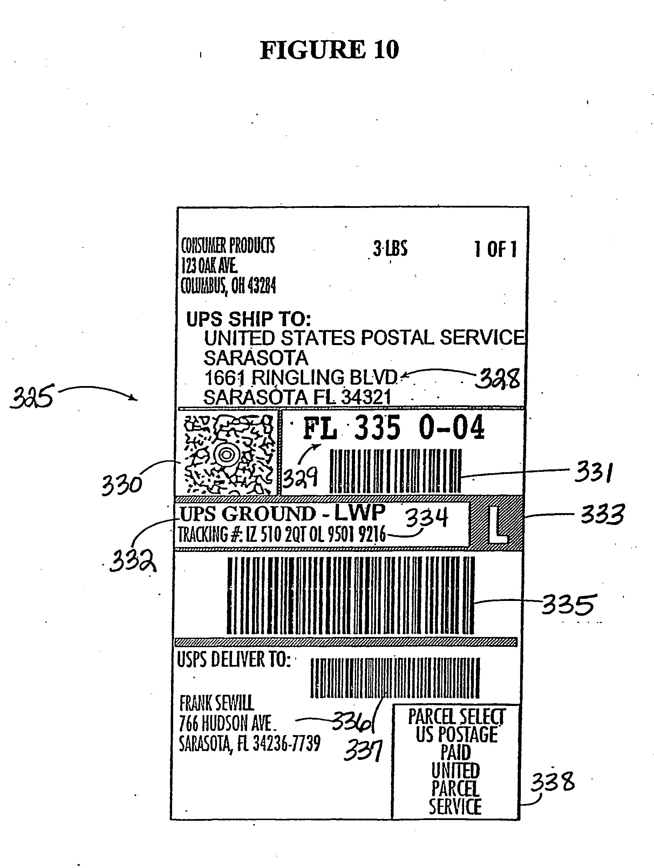

The software logic enables the shipper computer system **320** to alert the shipper as to whether the destination address of the recipient **312** is rural or urban and to generate the appropriate label according to the classification. An appropriate label **325** (analogous to container tracking label **32**) is shown in Figure 10. Preferably, the urban-bound packages receive a standard first carrier label and are generally handled like a regular package delivered by the first carrier.

Alternatively, for the rural packages (or packages in areas where delivery is not cost-effective for the first carrier due to a lack of facilities, roads, etc.) the shipper may be offered a combined carrier delivery level of service. If the shipper selects this option, the shipper system **320** generates a combination label **325** as shown in Figure 10. In one embodiment, the combination label **325** (analogous to container tracking label **32**) includes a second carrier address field **328** that indicates the destination delivery unit **317** (analogous to destination delivery unit **71)** to which the first carrier is to deliver the package, as shown in Figure 10. Above the second carrier address field **328** is a return address field **344** of the shipper **311** and a package weight field **345,** which in the illustrated label **325** of Figure 10 is 3 pounds.

Beneath the second carrier delivery address field **328** is a first carrier alphanumeric internal routing code **329** determining the first carrier sorting hub **314** (in Figure 10 the sorting hub is FL 335 and 0-04 indicates the conveyor belt within the sorting hub) to which the line haulers **313** are to deliver the package. Next to the internal routing code **329** is a Maxicode symbol **330** (a machine readable two-dimensional or dense code) and below the alphanumeric routing code **329** is a barcode symbol **331.** The Maxicode symbol **330** contains most or all of the information shown on the label **325** and at least a portion of the PLD information for the package. The bar code **331** duplicates the information contained in the alphanumeric routing code **329,** allowing the routing information to be determined using several types of scanning devices.

Beneath the codes **329-331** is a service name field **332** and a service icon **333** indicating the level or type of shipping service, which in the illustrated label is light-weight package (LWP) ground shipping with the icon "L". Beneath the service name field 332 is a first carrier tracking number (in the illustrated label "1Z 510 20T OL 9501 9216") field **334.** Beneath the tracking number field is a tracking number barcode **335** that symbolically represents the tracking number and allows automated scanning of the tracking number.

In a bottom section of the label **325** is a recipient address **336** to which either the first, or second, carrier is to deliver the package, depending upon the aforementioned criteria. Also at the bottom of the label **325** is a second carrier delivery confirmation barcode **337** that will be scanned by at least the second carrier, and preferably both carriers. The bar code **337** contains a second carrier tracking number, and a permit number or sender identification number indicating a source of postage to be paid by the first carrier.

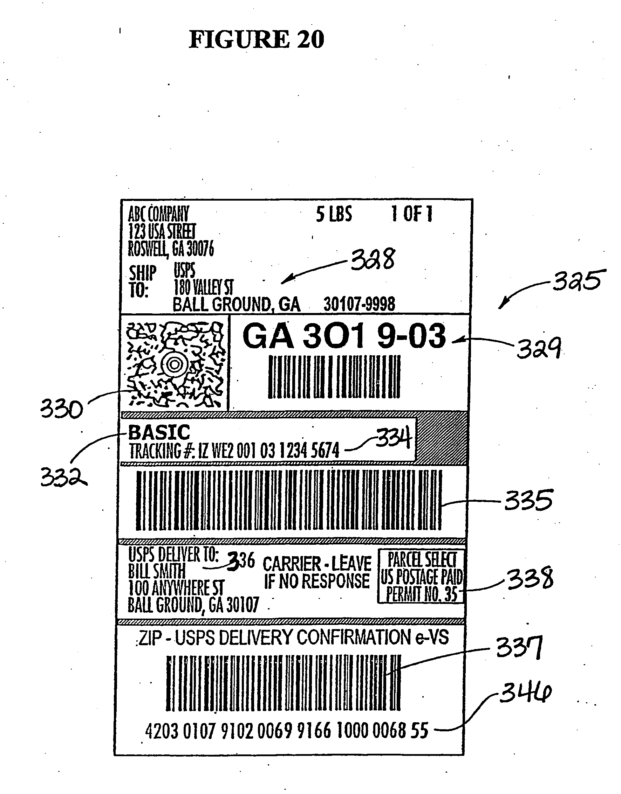

Alternatively, the barcode **337** could also be an alphanumeric code, or other symbol, that is unique to the package. It should be noted that in the illustrated embodiment of the label **325** the first and second carrier tracking numbers are included on the label which allows the two numbers to be associated with each other in a database in at least the first carrier computer system **322.** The presence of both tracking numbers on the label and stored in a common system facilitates communication between the two carrier computer systems **322, 323,** as well as providing consolidated tracking information to authorized persons. Parcel select indicia **338,** which is adjacent to the recipient address **336,** indicates that the first carrier will pay the postage for delivery by the second carrier (USPS). In another embodiment, the combination label **325** may have a different format (as shown in Figure 20) and can also include an alphanumeric delivery confirmation code **346** in addition to the barcode **337.**

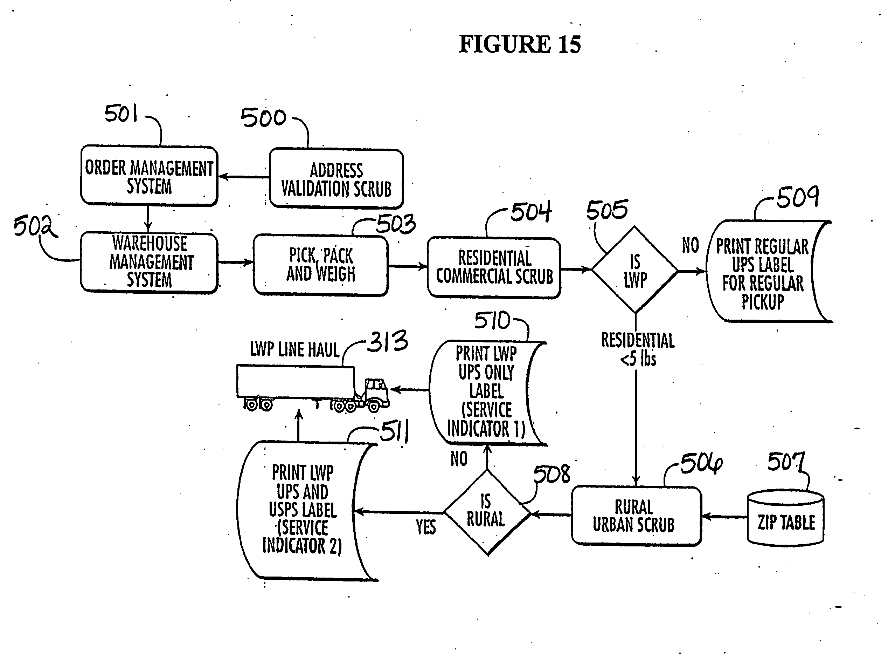

An exemplary flowchart of the duties of the shipper **311** and shipper computer system **320** is illustrated in Figure 15. PLD information is entered into the shipper computer system **320** and the destination address validated in a step 500, such as by verifying that the zip code is found in the state. The PLD information is coordinated with an order management system in step **501** and a warehouse management step **502** wherein the order is processed and the contents of the package are located. In a "pick, pack and weigh" step **503** the contents are selected, packed (such as in a conventional shipping container) and weighed by the scale **326.** In a residential versus commercial classification step **504,** the computer system **320** determines whether the delivery is to be to a residential or commercial location, such as by a comparison of the destination address to known commercial or residential addresses, by the amount of packages in the order or by an actual indication of the recipient **312** when placing the order. Validation can also include a residential-commercial "scrub" that validates whether an address is a commercial or residential address.

If the package is a commercial order, or is above a maximum weight (e.g., 5 pounds) as determined by a step **505,** the label printing device **327** prints a conventional delivery label in a step **509.** In a step **506,** the shipper computer system **320** consults a zip code database or table **507** having postal or zip codes in two groups, rural and urban. One of the rural or urban codes in the table **507** is matched to the postal code of the delivery address contained in the PLD information in a step **508.** If the destination is an urban destination, a conventional label indicating lightweight package delivery solely by the first carrier is generated and printed in a step **510** by the computer system **320.** Alternatively, if the destination is a rural destination, the combined carrier label **325** illustrated in Figure 10 is generated and printed in a step **511** by the shipper computer system **320.**

Advantageously, by using the combined carrier shipping system **310** the first carrier avoids delivering packages to rural areas where it is less efficient, justifying shipping at a discounted rate. However, alternative or additional classifications (conditions) may be used that are not limited to population density. For instance, other classifications may describe varying capabilities of the physical delivery facilities of the first carrier, such as the proximity to a sorting hub, an airport or a destination zip code in the middle of a complete road network. In other words, the classifications could distinguish areas to which the first carrier can deliver packages more easily and with lower cost from other areas. In addition, the present invention may be extended to three or more carriers, each having their own area of efficiency, either within the delivery process, or geographically. The term "efficiency" as used herein not only indicates the cost of a service, but can also refer to the amount of time required to implement the service. It could also include some other measure of effort required to perform, the service or consequences of performing the service.

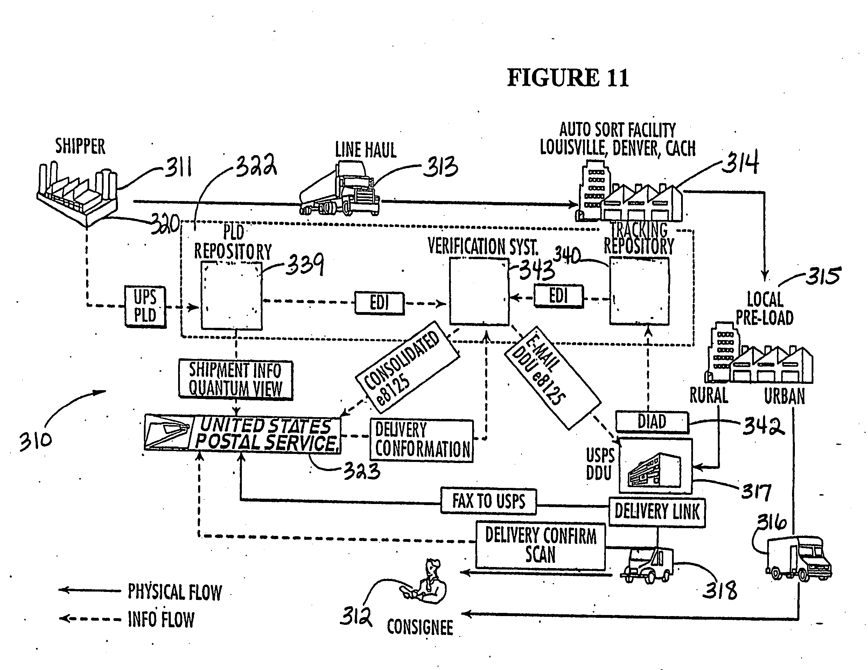

Referring to Figure 11, PLD data, including the data corresponding to that on the label **325,** is accessible by the shipper computer system **320** over the network **321.** The first carrier computer system **325** includes a PLD repository system **339** (analogous to the EOD container detail database **45** and/or the container level detail system **50**) and a tracking repository system **340** (analogous to DIALS **51**). The systems, **339** and **340,** may be integrated with the remainder of the first carrier computer system **322,** such as the embodiment illustrated in Figure 8, or may be distinct systems interconnected via a network, as shown in Figure 11. The PLD repository system **339** is configured to obtain the PLD information from the first carrier system **322** and storing the PLD information for further use by the combined shipping system **310.** Additional logic may also reside on the PLD system **339** that allows the generation of preliminary reports, or manifests, which are sent to the second carrier to prepare it for incoming packages from the first carrier.

The tracking system **340** has program logic and storage configured to obtain tracking information from the package as it travels through various points along the physical delivery path. For instance, the tracking repository system may be connected in communication over a cellular telephone network **341** to a code scanning unit such as a sorting hub scanner or a delivery information acquisition device (DIAD) **342** (analogous to the tracking devices **22**), as shown in Figure 8. In particular, the DIAD device is portable and is carried by the delivery driver delivering the package to the destination delivery unit (DDU) **317** of the second carrier (which is preferably the nearest DDU to the recipient or consignee **312** from which delivery can be achieved by the USPS in a day), or other intermediate physical pickup or delivery location along the path of package travel. The DIAD device includes a bar code scanner for reading the tracking number barcode **335** on the label **325,** and a signature capture pad.

Captured symbol and signature information is stored temporarily in the unit, and then transferred via an optical link to a docking station located in the delivery vehicle. From this station, the information is transmitted to the tracking system **340** via the cellular telephone network **341.** Other systems use radio frequency (RF) networks to relay tracking information to a central computer directly from the scanning unit. Scanning and barcode reading operations are described in more detail in commonly assigned U.S. Patent No. 5,770,841 entitled *System and Method for Reading Package Information,* which is incorporated herein by reference.

The first carrier computer system **322** also includes a verification and manifest generating system **343** (analogous to the electronic verification systems **52** in that it is configured to generate manifests for submission to quality control **56**), as shown in Figure 11. As will be described in more detail below, a final manifest allows the combined shipping system **310** and/or, as above, the containerized mail shipping system 10, to "close the loop," which is advantageous because the second carrier receives the packages at the destination delivery unit **317** and completes delivery of those packages without an up-front collection of the PLD information necessary for billing. Subsequent to delivering the package to the recipient, the second carrier obtains the final manifest from the first carrier (preferably electronically), which allows billing of the first carrier by the second carrier. As described below, the system **343** also can generate a preliminary manifest for submittal to the second carrier's transfer location **317** (such as a DDU) via automatically generated electronic mail.

The verification system **343** is connected in communication with the PLD and tracking systems **339, 340** and is configured to obtain PLD data and tracking data, respectively, from those systems. The verification system includes software logic configured to identify all of the packages inbound to a particular location, such as the sorting hub **314,** local pre-load facility **315,** the recipient location **312,** or the USPS destination delivery unit **317.** The verification system is also configured to generate a drop shipment verification and clearance manifest, preferably an e8125 which is an electronic version of the 8125 form required by the USPS for any large-quantity drop shipment delivered to a destination delivery unit **317.** In the embodiment of Figure 11, a portion of the verification system **343** logic resides on the PLD system 339 and allows the second carrier to access a preliminary manifest of packages inbound to a particular location.

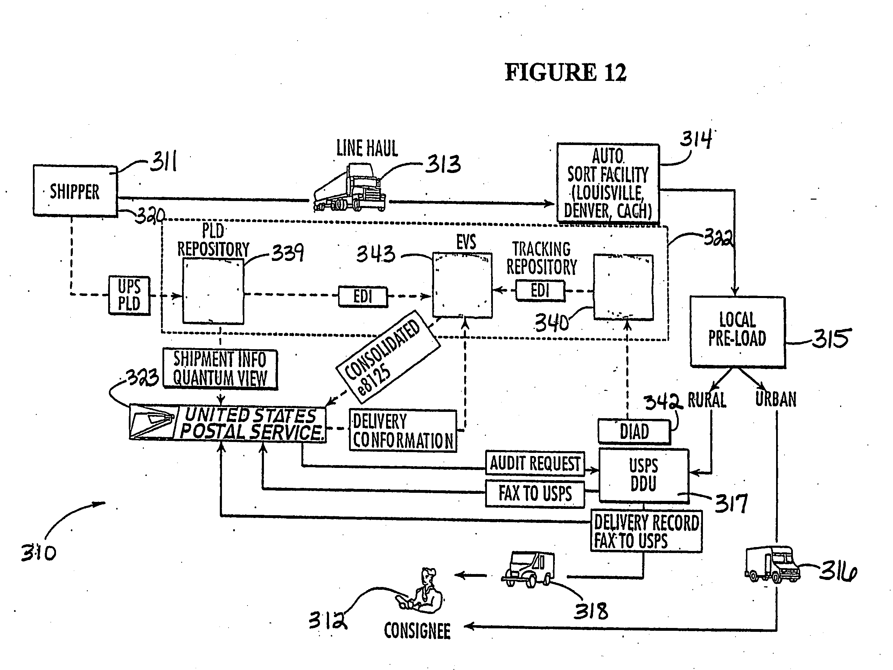

Communication within the first carrier computer system **322,** i.e., between the PLD system **339,** the tracking repository system **340** and the verification system **343** (and possibly the other systems) preferably occurs by electronic data interchange (EDI) which is a well-known set of standards and technologies designed to automate the sending and receiving of routine business documents. Communication between the second carrier computer system **323** and the first carrier computer system **322** is also preferably electronic. For instance, the second carrier system **323** may include software allowing connection to, and viewing of summary manifests on, the PLD system **339,** as shown in Figure 11. The e8125 manifest can also be sent electronically to the second carrier computer system **323,** such as via EDI, and to the destination delivery unit **317** of the second carrier, such as via electronic mail. In yet another alternative, communication with the destination delivery unit **317** may be by facsimile, as shown in Figure 12.

Additional details on communication and handling between shipping facilities and information systems can be obtained from commonly assigned U.S: Patent No. 6,539,360 entitled *Special Handling Processing in a Package Transportation System* which is incorporated herein by reference; and International Patent Publication WO 03019333 A2 (6 March 2003), entitled *International Cash-On-Delivery System and Method* which is also incorporated herein by reference. Further details about communication between a central server and a tracking and PLD systems are disclosed in commonly-owned U.S. Patent Application No. 10/176,467 entitled *Systems and Methods for Providing Business Intelligence Based on Shipping Information,* filed June 21, 2002 which is also incorporated herein by reference.

It should be noted that electronic communication as described herein may be accomplished over various types of networks and with various amounts of manual and automated efforts. As in the example above of a facsimile transmission, personnel at the delivery unit **317** may comply with an audit request from the second carrier computer system **323** by generating a paper manifest, inserting the manifest into a facsimile machine, dialing a number, etc. It should be also noted that the term "network" as used herein should be construed broadly to include all types of electronically assisted communication such as wireless networks, local area networks, public networks such as the Internet, public telephone networks, or various combinations of different networks.

The second carrier computer system **323** preferably is a pre-existing system configured to receive and process the electronic manifests, and of confirming delivery of the packages under its control. In particular, the second carrier computer system **323** receives tracking information through a scan of the second carrier confirmation barcode **337** on the label **325** at the time of delivery, as illustrated by Figure 11. In the embodiments illustrated in Figures 11 and 12, the second carrier computer system **323** is further configured to electronically communicate the confirmation information directly to the verification system **343** upon receipt.

During operation of the combined shipping system **310,** the shipper weighs the packages to be shipped and segregates the packages into those for which use of the combined carrier service is desired, and those for which normal first carrier delivery service is desired. The combined carrier service may require, for example, low priority, low weight (e.g., less than five pounds) packages desired to be shipped at a discount. The shipper **311** then enters PLD for all the packages for the various service levels into its computer system **320.** The PLD includes the recipient address which includes the zip code the computer system 320 uses to determine whether the delivery is to a zone eligible for combined carrier delivery, such as a rural area.

Other requirements to qualify for the discount can include, for example, shipping only to residential addresses, origin and destination within a country (such as the contiguous United States), maximum dimensions (such as 16 inches x 16 inches x 7 inches), electronic-only package detail upload or a lack of additional service options. A minimum average daily basic volume requirement may be imposed, such as 5,000 packages per day. Other examples include a minimum fill for a trailer, such as 80% or 90% of full trailer capacity or use of particular label standards. Also, release without a signature may be required at any location including apartments, condominiums and commercial addresses. These requirements can be set by the shipper based on a number of factors, including cost.

For an urban delivery, combined delivery service generally is not offered. A standard shipping label is generated and affixed to the package and the package is entered into the standard delivery process. When combined carrier delivery service is requested and available, the specialized label **325** is generated, including both transfer and recipient delivery addresses, and the first and second carrier tracking numbers. The PLD information is then communicated over the network **321** to the PLD repository system **339** of the first carrier.

Once the packages have been pre-processed by the shipper, the line haulers **313** pick up the packages from the shipper (or other starting location) and deliver them to the sorting hub **314** of the first carrier. All levels of service are commingled for this portion of the delivery path. At pick up from the shipper, the packages may be scanned by a DIAD so that tracking information is transmitted to the tracking system **340,** or tracking information for the list of packages may be downloaded into a DIAD from the shipper computer system **320.** Notably, tracking information can be reported by DIADs or other scanning units to the tracking system at several points along the physical delivery path by the first carrier, in a known manner not explained in detail here. At the hub **314,** the packages are sorted for delivery in a conventional manner, but with a possible delay imposed due to the low priority of the packages. Generally, the sorted loads of combined carrier service packages are processed only when there is available capacity at the hub **314.** From the hub **314,** the first carrier ships the packages to its preload facilities **315.**

An optional lane determination may be performed by the shipper **320** or first carrier **322** computer systems wherein package loads are separated into groups for delivery by different trucks of the line hauler **313** to different sorting hubs **314** based on the consignee's location. Determination of a lane, which corresponds to an outbound trailer position, is done by consulting a lane table indexed by consignee state, zip code, which in turn is used to identify a trailer or truck on which the load is to be placed. The trailer supply is typically forecasted by the line hauler **313** from information provided by the shipper.

Notably, the first carrier does not reweigh the packages weighed by the shipper **311** and the second carrier also agrees to accept the shipper-provided weight. If necessary, periodic audits of the shipper information are conducted to ensure accuracy. As another measure to ensure correct billing, the second carrier computer system **323** (and in particular the PLD repository system **339)** will not accept submission of a shipping request without both the PLD and first carrier tracking code to ensure that all shipments are properly manifested and billed.

At the preload facilities **315,** further sorting segregates according to zip code those packages to be delivered by standard first carrier service from those packages to be delivered by combined carrier service, typically bound for rural (or super-rural) zip codes. The packages bound for other (typically urban) destinations are delivered by the first carrier in a conventional manner.

The combined carrier delivery packages are delivered directly to the second carrier destination delivery unit **317** by the first carrier. Upon arrival of the packages at the destination delivery unit, the first carrier driver scans each of the packages in accordance with normal bulk stop practice, then has personnel of the second carrier verify the package count and sign the DIAD **342** for the packages. The DIAD transmits the information on the packages delivered to the DDU **17** back to the tracking system **340.** The first carrier driver also submits form 8125 data on the packages to the DDU.

As an alternative to the physical 8125 manifest, the DIAD scan may be used to provide package information directly to the DDU **317.** Preferably, the DIAD **342** has the capacity to uplink to a personal digital assistant (PDA) which in turn is in communication with a DDU portion of the second carrier computer system **323.** Such communications are preferably wireless, such as through the use of radio frequency signals, an optical interface or infrared signals. In another aspect, the PDA may be in direct communication with a printer at the DDU (not shown) allowing printing of the DIAD scan, or the DIAD itself may be able to directly communicate with the computer system **323** or the printer.

A more complete description of the use of an uplink-type DIAD is disclosed in commonly owned U.S. Patent No. 6,285,916 which is incorporated herein by reference. For instance, Figure 1 of U.S. Patent No. 6,285,916 illustrates such an uplink system including a DIAD (**35** of U.S. Patent No. 6,285,916) connected via an optical interface (**37, 38** of U.S. Patent No. 6,285,916) to a PDA (**12** of U.S. Patent No. 6,285,916). A mail room PC (**40** of U.S. Patent No. 6,285,916) is connected via an infrared port (**23, 42** of U.S. Patent No. 6,285,916) to the PDA. In this manner, the DIAD can communicate its tracking information directly to the PDA and the PDA communicates the information, in turn, to the mail room PC.

Regardless of how the delivery information has passed to the second carrier, the second carrier then delivers the packages received from the first carrier in a normal manner along with other mail or packages. The second carrier driver scans the delivery confirmation bar code **335** upon delivery to the recipient, and this tracking information is loaded into the second carrier computer system **323,** typically within a few hours. For the deliveries by the second carrier, all of the rules for package release of the first carrier are applied. For instance, if the first carrier normally makes only a single delivery attempt, then the second carrier does likewise. Undeliverable packages are then preferably returned to the shipper after a predetermined (e.g., five day) waiting period. In this manner, shipment by the first or second carrier is relatively transparent to the recipient **312.**

The verification system **343** subsequently obtains the delivery confirmation information from the second carrier computer system **323,** the tracking information from the tracking system **340** and the PLD from the repository system **339** and generates a manifest which is sent to the second carrier system **323.** By comparing the information received from these sources, the first carrier can provide an auditable manifest of the day's package shipments to the second carrier computer system **323.** For U.S. deliveries, preferably the manifest is sent to the second carrier by 10:00 pm Pacific Time. Upon successful auditing, the consolidated manifest is used by the second carrier to create the bill which is sent to the first carrier describing the exact number of parcels delivered by the carrier. Creation of the auditable manifest inspires the confidence needed by the second carrier to receive and ship large volumes of packages of varying weight, dimension, destination, etc. while foregoing prepayment but still being assured of proper compensation.

In the embodiment illustrated in Figure 11, the combined shipping system **310** further includes immediately storing the PLD in the PLD repository system **339,** allowing the first carrier to provide advanced shipment notification to the second carrier via electronic mail of the preliminary manifest (e8125). The PLD information contains a unique shipper number associated with each transfer location **317,** such as each USPS DDU. Advanced shipment notification gives the destination delivery unit **317** advance notice of the number of packages to expect in a few days for delivery. While the packages are being sorted and delivered by the first carrier, the verification system **343** uses the EDI format to pull data from the PLD repository 339 and builds and sends the electronic manifest (e8125) to the destination delivery unit 317.

As noted above, when the combined carrier delivery packages reach the destination delivery unit **317,** the second carrier personnel confirm that the shipment matches the preliminary manifest, sign the DIAD **342.** The data is sent immediately to the tracking system **340.** The verification system **343** obtains the data from the tracking system **340** and compares it to the PLD data already in memory. As shown in Figure 11, the second carrier delivery confirmation data, which subsequently is obtained from the second carrier delivery driver **318** via the second carrier computer system **323,** provides a third source of information for constructing a final electronic manifest.

The PLD information contains both tracking numbers which allows the first carrier tracking number-referenced information from the tracking system **340** to be matched with the second carrier tracking number-referenced information from the second carrier delivery confirmation. Using these three sources of data, the verification system **43** builds a consolidated electronic manifest (e8125) of the day's packages and sends it to the second carrier computer system **323** for auditing. The manifest may be sorted or arranged as specified by the second carrier to facilitate auditing and billing. For instance, the manifest could be sorted by destination delivery unit **317** zip code, allowing the second carrier to view all packages handled at each DDU for the day.

In the embodiment illustrated in Figure 12, additional steps may be taken by the second carrier (as facilitated by the combined shipping system 310) to ensure accurate auditing and billing. As in the embodiment above, the electronic manifest is built and sent to the destination delivery unit **317** which compares it to the packages received from the first carrier. The confirmed manifest can then be faxed to the managers of the second carrier computer system **323** for entry therein and reconciliation with the tracking and billing information.

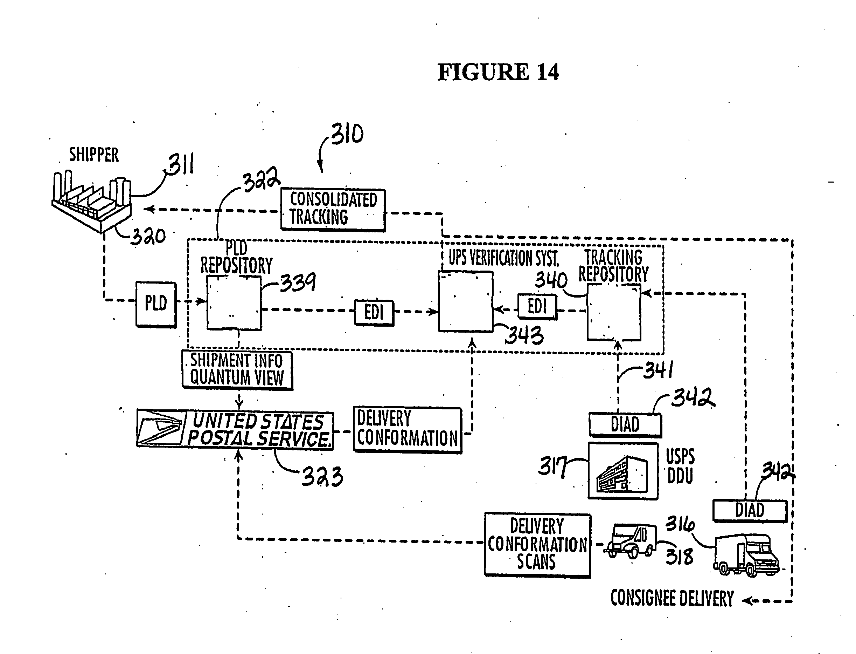

Figure 14 illustrates a flow of tracking information in isolation from the physical flow of the package for additional clarity. The initially submitted PLD information is sent from the shipper computer **320** to the PLD repository system **339.** Each of the DIADs **342,** in particular one DIAD at the DDU **317** and another at the first carrier delivery facility (truck) **342** communicate first carrier tracking information to the tracking system **340.** The delivery confirmation scans of the second carrier are transmitted to the second carrier computer system **323.**

The verification system **343** periodically pulls the PLD information from the PLD repository system **339** and the tracking information from the tracking repository each preferably using the EDI 213 standard. Delivery confirmation is sent by (or pulled from) the second carrier computer system **323** to the verification system **343.** The first carrier tracking number of the original PLD information is matched to the DIAD tracking information and the second carrier delivery confirmation (via the second carrier confirmation tracking number) by the verification system **343.** The consolidated tracking information is then uploaded to the shipper computer 320 and may also be made available to the recipient **312.** Upload may be by way of a flat file that includes comma-delimited tracking data that is useable with enterprise resource planning (ERP) systems, customer service systems and the shipper's own web sites.

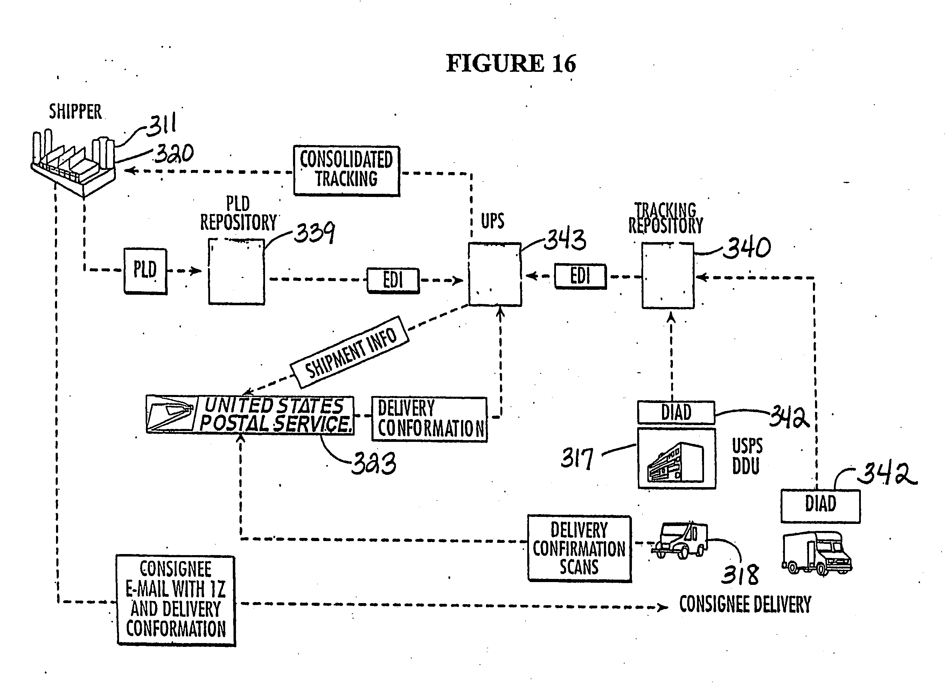

In another alternative shown in Figure 16, the recipient (i.e., the consignee) is informed of the tracking information, including the tracking number and delivery confirmation, with an electronic mail message. The shipper computer **320** may also access the tracking information via a web-based inquiry to the verification system **343** of the tracking repository **340.** Another option is access via Internet-based application programming interfaces, or APIs. Yet another option is to use a single tracking number for both urban and remote delivery so that a single shipper account number can be used for manifesting both types of deliveries.

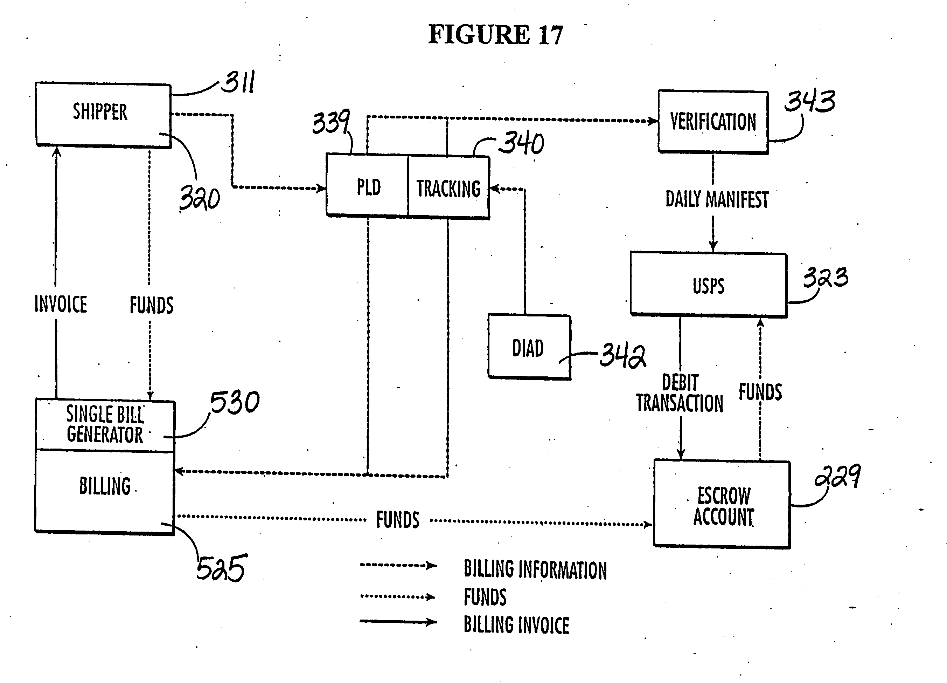

In addition to controlling the flow of tracking information and the physical delivery of packages, the above-described combined carrier shipping system **310** may have additional, or alternative, aspects that allow or facilitate the flow of funds for delivery services. For instance, a billing aspect of another embodiment of the combined carrier shipping system **310** of the present invention is illustrated in Figure 17. The flow of billing information is indicated in Figure 17 by a long-dash line, the flow of funds is indicated by a short-dash line and the movement of various invoices is indicated by the heavy black solid line.

A first carrier billing system **525** is preferably a computer system configured to calculate the cost involved with each shipment based on information collected from the other systems. A portion of the cost that includes shipment by the line haul carrier **313** from the shipper **311** to the sort facility **314** is calculated using mileage. Similarly, delivery costs to the DDU **317** of packages determined by the shipper computer **320** to require delivery to rural zip codes (or some other less efficient location) are also calculated. Further, costs are assessed for delivery by the second carrier from the DDU **317** to the recipient **312,** when necessary.

The first carrier billing computer system **525** is connected in communication with the PLD repository system **339** from which it obtains billing information, including an indication of whether shipping requires just the first carrier, or a combination of carriers. Preferably, this indication is from use of a specific flag placed by the shipper **311** or the presence of a tracking number for the second carrier in the PLD information. This indication allows a determination by the billing system **525** of whether to include charges from the line haul carrier **313,** the second carrier, or both.

The first carrier billing system **525** is also connected to the tracking system **340** from which it obtains tracking information on the progress of physical package delivery. Such information is used to determine the distance, and other indicators of the amount of effort involved in delivery such as the number of stops and sorts, that are factors in calculating the delivery charges. Similar to previously illustrated embodiments, the tracking system 340 is connected in communication with one or more DIADs **342** from which it obtains the information on packages passing through locations along the delivery route.

Billing by the second carrier is implemented by a portion the second carrier computer system **323** which is connected in communication with the verification system **343** and is configured to receive the daily manifest therefrom. Also connected in communication with the second carrier computer system **323** is an escrow account **529** (set up at initiation of the combined shipping system **310)** from which the second carrier can withdraw funds for payment of the fees associated with each daily manifest. In this manner, the second carrier always has immediate access to funds once it has received and completed auditing of the daily manifest.

An integrated, or separate, component of the first carrier billing system **525** may include a single bill generator **530.** The single bill generator is configured to compile the charges calculated by the rest of the billing system **525** into individual bills that are easily handled and paid by the shipper **311.** The bill generator **530** may also be configured to add additional surcharges to the bill required by the various carriers.

During operation the shipper **311** records shipments on its computer system **320** from which the PLD information is uploaded to the PLD repository system **339.** Physical delivery of the packages commences and the tracking system **340** tracks the progress of the packages using the DIADs **342** until either final delivery by the first carrier in the case of conventional packages labeled by the shipper system **320,** or delivery to the DDU **317** of the second carrier for transfer.

At the end of each day, the daily manifest is constructed (such as described in detail in the embodiments above) and communicated to the second carrier computer system **323.** Upon receiving the manifest, the second carrier conducts the various audit and quality control procedures described above and below and then debits the escrow account **529.** Funds are transferred, preferably electronically, from the escrow account to the carrier computer system **323.** Alternatively, some or all of the audit and quality control procedures may be conducted after the debit transaction and any necessary corrections refunded or further debited to the escrow account **529.**

Either during, or at the end of, the same day, the first carrier billing system **525** obtains PLD information and tracking information from the PLD repository and verification systems **339, 340.** The PLD and tracking information determines the individual charges to be levied by the first carrier, second carrier, and line haul carrier, respectively. These charges are packaged in an invoice, along with any other surcharges, by the single bill generator **530** and the invoice is then submitted to the shipper **311.**

Payment by the shipper **311,** preferably electronically by the shipper computer system 320, is transmitted to the first carrier billing system **525.** The first carrier billing system deducts the charges for the first carrier's services (which may also include charges required by the line-haul carrier **313)** and forwards the remaining amount, preferably electronically, to the escrow account **529.** Advantageously, the escrow account is available for debit by the second carrier at any time, further bolstering the second carrier's confidence that compensation is being received for its delivery services.

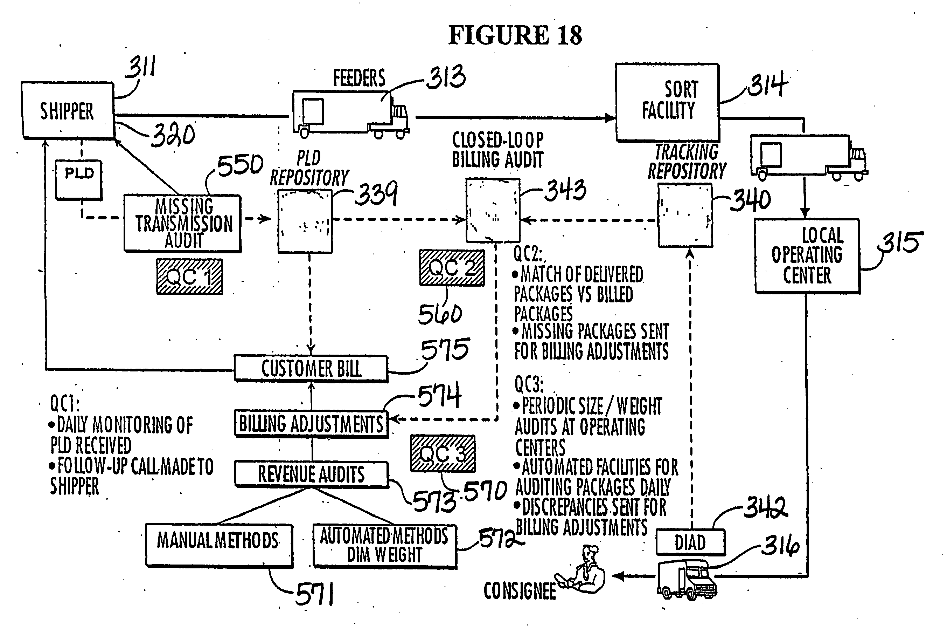

Billing may be further facilitated by several options for quality control ("QC") wherein the accuracy of the tracking, PLD and other information is confirmed via several audit cycles, as shown in Figure 18. As shown by a first quality control step **550,** the PLD repository system **339** can be monitored for missing transmissions. For instance, follow-up telephone calls or electronic communications (such as an electronic manifest) may be made to the shipper **311** to confirm that all shipments have been received that were sent by the shipper. Such electronic communications would relate the information recorded by the PLD repository system **339** for a day to the shipper **311.** The shipper would then compare the records made by the shipper computer **320,** or recorded on paper, to those made by the PLD repository system **339.** Shipments that failed to be transmitted to the PLD repository system **339** could be retransmitted.

Another quality control step **560** may be implemented using the verification system **343.** In step **560** delivery confirmations recorded by the system **343** via communication with the tracking system **340** in the case of conventionally delivered packages entirely via the first carrier, or with the second carrier computer system **323** in the case of combined delivery, are compared with the billing statements sent by the first carrier billing system **525.** Discrepancies are communicated to the billing system **525** for adjustment of the bill, e.g., by adding missed packages.

Yet another quality control step **327** is conducted at the operating center **315** by the first carrier. Periodic size and weight checks are conducted at the operating center either manually **571,** or automatically **572,** or both. The automated facilities are configured to audit packages on a daily basis. An amount of revenue that should be associated with the package size and weight determined by the audit is calculated **573,** such as by the first carrier billing system **525.** The difference in the initial calculation is compared to the audit calculation and billing adjustments are made **574** and applied to the final invoice or bill **575** before it is communicated to the shipper **311** for remuneration.

In addition to the quality control steps performed by the first carrier, the various audits by the second carrier may also be regarded as additional quality control steps. As described above, the second carrier has an opportunity to compare the packages listed on the electronic manifest (or the capture and printout of the DIAD **342** information) with the packages as they are received at the DDU **317.** Discrepancies between the manifest and the actual packages received could be reported to the billing system **525** for adjustment of the bill. Billing could also be adjusted by the second carrier merely adding or subtracting funds from the escrow account **529.** A connection between the second carrier system **323** wherein the facsimile of the confirmed manifest shown in Figure 12 can be used to detect anomalies which are reported to the billing system **525** for adjustment. The net effect of the multiples quality control cycles and audits is that they allow the second carrier to be confident of accurate compensation for its part in the combined package deliveries. In turn, the second carrier can pass on savings from its efficiency in the rural areas to the first carrier.

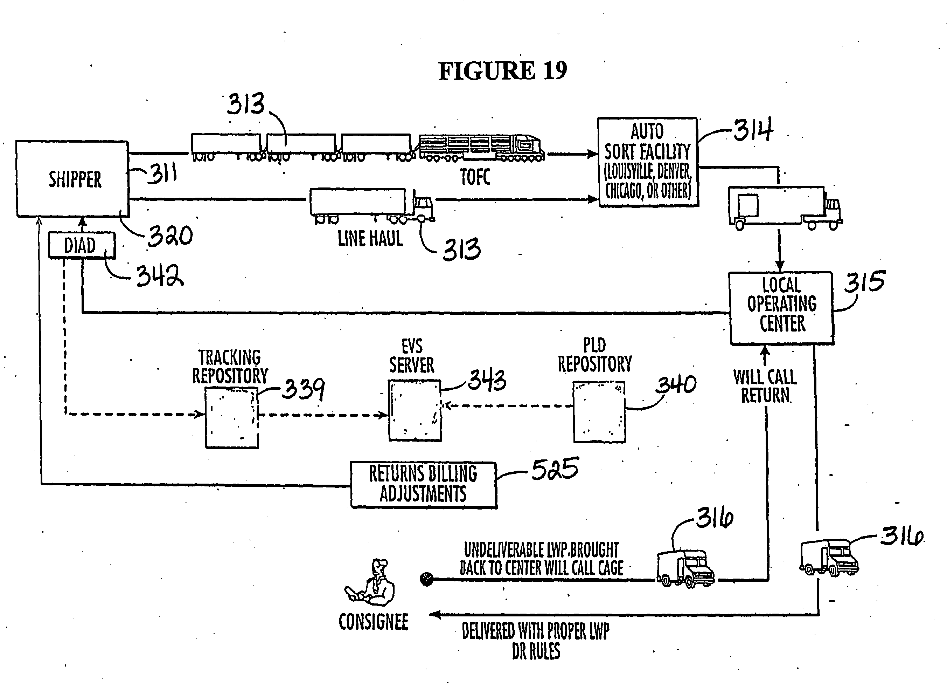

A return aspect of the combined shipping system **310** of the present invention is illustrated schematically by Figure 19. Packages delivered under the combined shipping system **310** are delivered using predetermined customer relationship rules. These rules include rules about delivery times, number of attempts at delivery, duration before return, etc., that govern how returns are handled. For example, the rules may require delivery within 24 hours after the DIAD scan at the DDU, only a single attempt at delivery and if no recipient **312** is present for delivery, a return to the shipper **311** of the package after a 5 day period.

Referring again to Figure 19, packages are delivered using the aforementioned exemplary customer relationship rules. If the recipient **312** is not present, the package is returned to the local first carrier operating center **315** by the first carrier delivery truck **316.** The returned package is held for five days in a "will call" cage at the local operating center, making the package available for call and pickup by the recipient **312.**

If the package is not picked up after five days, a return to sender process is commenced wherein the package is returned to the shipper **311.** At the shipper's location, a DIAD **342** is used to record the shipper's acknowledgement of receipt of the returned package. The information from the DIAD is recorded by the tracking system **340** and is accessed by the verification system **343** for matching with the PLD information from the PLD repository system **339.** The first carrier billing system **525** then calculates the original cost of shipping and adds an additional cost for the return services based on the PLD information obtained from the verification system **343.** Typically, return services will have a cost that is about the same as the outbound shipment.

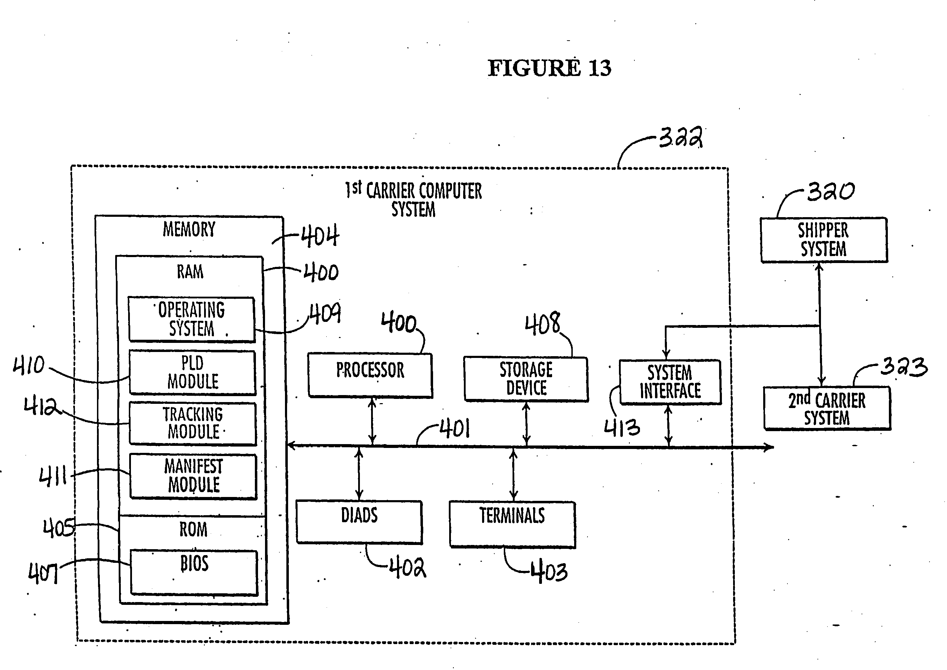

An embodiment of the first carrier computer system **322** of the present invention is shown schematically in Figure 13. The first carrier computer system includes a processor 400 that communicates with other elements within the computer system **322** via a system interface or bus **401.** Also included in the first carrier computer system **322** are display and input devices, including the DIADs **402** used for tracking and various terminals **403** for receiving and displaying data within the system. The first carrier computer system **322** further includes memory **404,** which preferably includes both read only memory (ROM) 405 and random access memory (RAM) **406.** The ROM **405** is used to store a basic input/output system (BIOS) **407** containing the basic routines that help to transfer information between elements within the first carrier computer system **322.**

In addition, the first carrier computer system **322** includes at least one storage device **408,** such as a hard disk drive, a floppy disk drive, a CD-ROM drive, or optical disk drive, for storing information on various computer-readable media, such as a hard disk, a removable magnetic disk, or a CD-ROM disk. As will be appreciated by one of ordinary skill in the art, each of these storage devices **408** is connected to the system bus by an appropriate interface. The storage devices **408** and their associated computer-readable media provide non-volatile storage for the first carrier computer system **322.** It is important to note that the computer-readable media described above could be replaced by any other type of computer-readable media known in the art. Such media include, for example, magnetic cassettes, flash memory cards, digital video disks, and Bernoulli cartridges.

A number of program modules may be stored by the various storage devices, such as within RAM **406** (as shown in Figure 13) or within the storage device **408** (as not shown for clarity). Such program modules include an operating system **409,** a PLD module **410,** a verification module **411** and a tracking module **412.** As described both above and below, the PLD module is configured to record and store PLD information from the shipper computer system **320** and may also be configured to generate reports of the packages, along with their PLD information, en route to the destination delivery unit **317.** These modules **410, 411** and **412** may be added to, run with, integrated into, exchanged with, etc., the modules of the containerized mail shipping system **10,** such as the mail scanning module **90,** the mail sorting module **91,** the identification generator module **92,** the label generating module **93,** the tracking module **94,** the manifest generating module **95,** the verification module 96 and the billing module **97.** The verification module **411** is configured to generate the billing manifests using the PLD information, tracking information and the confirmation information received from the second carrier. Also located within the first carrier computer system **322,** is a system interface **413** for interfacing and communicating with other elements of the overall combined shipping system **310,** such as the shipper computer system **320** and the second carrier computer system **323.**

Figures in the present application are block diagrams, flowcharts and control flow illustrations of methods, systems and program products according to the invention. It will be understood that each block or step of the block diagram, flowchart and control flow illustration, and combinations of blocks in the block diagram, flowchart and control flow illustration, can be implemented by computer program instructions. These computer program instructions may be loaded onto a computer or other programmable apparatus to produce a machine, such that the instructions which execute on the computer or other programmable apparatus create means for implementing the functions specified in the block diagram, flowchart or control flow block(s) or step(s).

These computer program instructions may also be stored in a computer-readable memory that can direct a computer or other programmable apparatus to function in a particular manner, such that the instructions stored in the computer-readable memory produce an article of manufacture including instruction means which implement the function specified in the block diagram, flowchart or control flow block(s) or step(s). The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the block diagram, flowchart or control flow block(s) or step(s).

Accordingly, blocks or steps of the block diagram, flowchart or control flow illustration support combinations of means for performing the specified functions, combinations of steps for performing the specified functions and program instruction means for performing the specified functions. For example, Figure 3 illustrates the shipping order interface **43** which is configured to generate GUI's for recording shipping information about containers, the manifest **46** creates manifests of container contents and barcodes for papers manifests and Figure 4 illustrates the electronic verification system **52** which uploads and correlates container contents manifest information, container tracking information and mail piece information. It will also be understood that each block or step of the block diagram, flowchart or control flow illustration, and combinations of blocks or steps in the block diagram, flowchart or control flow illustration, can be implemented by special purpose hardware-based computer systems which perform the specified functions or steps, or combinations of special purpose hardware and computer instructions.

The present invention has many advantages. For example, the containerized mail shipping system **10** of the present invention allows tracking of mail pieces **12** even when inside containers **13.** Shipping of mail in containers advantageously allows the sorted state of the mail pieces **12** to be maintained so that qualifications for discounted shipping rates can be met. In addition, the containerized mail shipping system **10** is capable of creating manifests of the contents of each of the containers **13,** the number of mail pieces **12** submitted by each consignor, the number, identity, origin and destination of mail pieces sorted and shipped to the postal service **14** at the end of each day and delivery confirmation of the mail pieces and containers. These manifests, and other information, can be transmitted electronically to the various parties involved in delivery of the mail pieces **12,** including the consignor **11** and the postal service **14,** to facilitate auditing and billing for the deliveries.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A containerized mail delivery system (10) for delivering a plurality of mail pieces (12), said system comprising:
a sorting system capable of obtaining mail piece information on each of the mail pieces (12) in each of a plurality of containers (13) and sorting the mail pieces (12) amongst the plurality of containers (13), each of said containers (13) being associated with an identifier;
a tracking system configured to obtain tracking information indicating detection of the identifier on one of the containers (13) wherein detection corresponds to delivery of the container (13) to a delivery location; and
a manifest generation system connected in communication with the sorting system and the tracking system, **characterized in that** said manifest generation system is configured to generate a manifest by correlating, using the identifier, the tracking information indicating delivery of the container (13) to the delivery location, with the mail piece information on each of the mail pieces (12) in the container (13).

2. A containerized mail delivery information system (10) of Claim 1, wherein the tracking information indicates optical detection of the identifiers associated with the containers (13).

3. A containerized mail delivery system (10) of Claim 1 or Claim 2, wherein the sorting system includes a mail piece information system having a scanner configured to obtain the mail piece information from the mail pieces (12) and wherein the sorting system is configured to sort the mail pieces (12) based on the mail piece information.

4. A containerized mail delivery system (10) of any preceding Claim, further comprising an identification generation apparatus configured to generate a plurality of identifiers and associate each of the identifiers with a respective one of the containers (13).

5. A containerized mail delivery system (10) of any preceding Claim, further comprising a mail piece counting apparatus configured to record a customer identity, receive a plurality of mail pieces (12) associated with the customer identity, generate a count of the mail pieces (12) and associate the count with the customer identity.

6. A containerized mail delivery system (10) of Claim 5, further comprising a billing system (525) configured to calculate a cost of sorting and delivery services for delivery of the mail pieces (12) in proportion to the count of the mail pieces (12).

7. A containerized mail delivery system (10) of any preceding Claim, wherein the sorting system includes a regional sorting facility (19) capable of sorting the mail pieces (12) into containers (13) for delivery to a local sorting facility (20) configured to sort each of the mail pieces (12) into different containers (13) using a delivery address of the delivery information.

8. A containerized mail delivery system (10) of any preceding Claim, wherein the manifest generation system is further configured to generate a container contents manifest (54) including mail piece information describing the mail pieces (12) in one of the containers (13) and wherein the tracking system is further configured to upload a container contents manifest (54) from the manifest generation system and display the container contents manifest (54) to the consignee.

9. A containerized mail delivery system (10) of Claim 1, further comprising:
a mail piece information apparatus configured to determine mail piece information associated with each of the mail pieces (12); and
an identification generator configured to generate a plurality of identifiers, each of said identifiers associated with one of a plurality of containers (13), wherein
the sorting system further comprises:
a sorting apparatus controller (41) connected in communication with the mail piece information apparatus, the identification generator and the sorting system,
the sorting apparatus controller (41) configured to obtain the mail piece information from the mail piece information apparatus and the identifier associated with each of the containers (13) from the identification generation apparatus; and
the sorting apparatus controller (41) further configured to instruct the sorting system to direct a portion of the mail pieces (12) to a selected one of the containers (13) using the mail piece information and correlate the portion of the mail pieces (12) directed to the selected container (13) with the identifier of the selected container (13);
the tracking system connected in communication with a plurality of tracking devices and further configured to receive tracking information from one of the tracking devices indicating detection, at a consignee transfer location, of the identifier associated with the selected container (13); and
the manifest generation system further connected in communication with the consignee, the manifest generation system further configured to obtain the tracking information from the tracking system, generate a manifest by correlating, using the identifier, the mail piece information associated with each of the mail pieces (12) in the container (13) and the tracking information indicating detection of the container (13) at the consignee transfer location, and electronically communicate the manifest to the consignee to facilitate billing and further delivery of the mail pieces (12) by the consignee.

10. A containerized mail delivery system (10) of Claim 9, wherein the tracking system is further configured to receive tracking information from other tracking devices indicating detection of the identifiers along a delivery route of the container (13) on its way to the consignee transfer location.

11. A containerized mail delivery system (10) of Claim 1, further comprising:
a mail delivery information device comprising a processing element connected in communication with the sorting system and the tracking system, said processing element configured to:
receive the mail piece information on each of the plurality of mail pieces (12) from the sorting system,
receive the plurality of container identifiers,
associate the mail piece information of each of the mail pieces (12) with the container identifier of the container (13) into which the mail piece (12) was sorted,
receive tracking information from the tracking system, said tracking information indicating detection of one of the plurality of container identifiers at the delivery location, and
generate manifest data by correlating, using the container identifier, the tracking information indicating delivery of the container (13) to the delivery location with the mail piece information of the mail pieces (12) in the container (13).

12. A containerized mail delivery system (10) of Claim 1, wherein the mail piece information of each of the mail pieces (12) sorted into one of the containers (13) has a common aspect.

13. A containerized mail delivery system (10) of Claim 1, wherein the tracking information also includes indications of detection of the identifier along a delivery route to the delivery location and wherein the processing element is further configured to correlate the delivery route detections to the mail piece information in the manifest data.

14. A method of sorting and delivering a plurality of mail pieces (12) in a plurality of containers (13), said method comprising:
obtaining mail piece information on each of the mail pieces (12);
sorting the mail pieces (12) amongst the plurality of containers (13), wherein each of the containers (13) is associated with an identifier;
obtaining tracking information indicating detection of the identifier on one of the containers (13) wherein detection corresponds to delivery of the container (13) to a delivery location;
generating a manifest by correlating, using the identifier, the tracking information indicating delivery of the container (13) to the delivery location with the mail piece information on each of the mail pieces (12) in the container (13).

15. A method according to Claim 14, further comprising generating the container identifiers and associating each of the identifiers with a respective one of the containers (13).

16. A method according to Claim 14, further comprising electronically transmitting the manifest to a consignee.

17. A method according to Claim 14, further comprising obtaining tracking information indicating detection of the container (13) along a delivery route to the delivery location and wherein generation of the manifest further includes correlating the tracking information indicating detection of the container (13) along the delivery route with the mail piece information on each of the mail pieces (12) in the container using the container identifier.

18. A method according to Claim 14, further **characterized by** the steps:
generating a plurality of identifiers, each of said identifiers being associated with one of said plurality of containers (13);
directing a portion of the mail pieces (12) to a selected one of the containers (13) using the mail piece information and correlating the portion of the mail pieces (12) directed to the selected container (13) with the identifier of the selected container (13);
communicating with a plurality of tracking devices and receiving tracking information from one of the tracking devices indicating detection, at a consignee transfer location, of the identifier associated with the selected container (13); and
generating a manifest by correlating, using the identifier, the mail piece information associated with each of the mail pieces (12) in the container (13) and the tracking information indicating detection of the container (13) at the consignee transfer location; and
communicating the manifest to the consignee to facilitate billing and further delivery of the mail pieces (12) by the consignee.

19. A computer program product for controlling sorting, delivery and tracking of a plurality of mail pieces in a plurality of containers, the computer program product comprising a computer-readable storage medium having computer-readable program code portions stored therein, the computer-readable program code portions comprising:
a first executable portion for obtaining mail piece information on each of the mail pieces (12) in each of the plurality of containers (13),
a second executable portion for sorting the mail pieces (12) amongst the plurality of containers (13) wherein each of the containers (13) is associated with an identifier;
a third executable portion for obtaining tracking information indicating detection of the identifier on one of the containers (13) wherein detection corresponds to delivery of the container (13) to a delivery location; and
a fourth executable portion for generating a manifest by correlating, using the identifier, the tracking information indicating delivery of the container (13) to the delivery location with the mail piece information on each of the mail pieces (12) in the container (13).

## Patentansprüche

1. Container-Postbeförderungssystem (10) zur Beförderung einer Mehrzahl von Poststücken (12), enthaltend
ein Sortiersystem, dem Poststückinformation über jedes der Poststücke (12) in jedem einer Mehrzahl von Containern (13) zugeführt wird und das die Poststücke (12) zwischen der Mehrzahl von Containern (13) sortiert, denen je ein Identifikator zugeordnet ist;
ein Wegverfolgungssystem, dem Wegverfolgungsinformation zugeführt wird, welcher anzeigt, dass der Identifikators auf einem der Container (13) ermittelt wurde, was der Beförderung des Containers (13) zu einem Auslieferungsort entspricht, und
ein Ladelistenerzeugungssystem, welches in Verbindung mit dem Sortiersystem und dem Wegverfolgungssystem steht,
**dadurch gekennzeichnet, dass** das Ladelistenerzeugungssystem derart ausgebildet ist, dass es unter Verwendung des Identifikators eine Ladeliste durch Korrelation der Wegverfolgungsinformation, welche die Beförderung des Containers (13) zum Auslieferungsort angibt, mit der Poststückinformation auf jedem der Poststücke (12) in dem Container (13).

2. Container-Postbeförderungs-Informationssystem (10) nach Anspruch 1, bei welchem die Verfolgungsinformation eine optische Ermittlung der den Containern (13) zugeordneten Identifikatoren anzeigt.

3. Container-Postbeförderungssystem (10) nach Anspruch 1 oder 2, bei welchem das Sortiersystem ein Poststückinformationssystem mit einem Abtaster aufweist, dem die Poststückinformation von den Poststücken (12) zugeführt wird, und wobei das Sortiersystem so konfiguriert ist, dass es die Poststücke (10) aufgrund der Poststückinformation sortiert.

4. Containerpostbeförderungssystem (10) nach einem der vorstehenden Ansprüche, weiterhin enthaltend eine Identifikatorerzeugervorrichtung, die eine Mehrzahl von Identifikatoren erzeugt und jeden der Identifikatoren einen entsprechenden Container (13) zuordnet.

5. Containerpostbeförderungssystem (10) nach einem der vorstehenden Ansprüche, weiterhin mit einem Poststückzähler, der eine Kundenidentität registriert, dem eine Mehrzahl von dieser Kundenidentität zugeordneten Poststücken (12) zugeführt wird, der einen Zählwert dieser Poststücke (12) bildet und ihn der Kundenidentität zuordnet.

6. Containerpostbeförderungssystem (10) nach Anspruch 5, ferner enthaltend ein Abrechnungssystem (525), welches einen Kostenbetrag für Sortier- und Beförderungsdienste für die Beförderung der Poststücke (12) proportional zu dem Zählwert der Poststücke (12) berechnet.

7. Containerpostbeförderungssystem (10) nach einem der vorstehenden Ansprüche, bei welchem das Sortiersystem eine regionale Sortiereinrichtung (19) enthält, welche die Poststücke (12) in Container (13) zur Beförderung zu einer lokalen Sortiereinrichtung (20) sortiert, die so ausgebildet ist, dass sie jedes der Poststücke (12) unter Verwendung einer Beförderungsadresse der Beförderungsinformation in verschiedene Container (13) sortiert.

8. Containerpostbeförderungssystem (10) nach einem der vorstehenden Ansprüche, bei welchem das Ladelistenerzeugungssystem weiterhin so ausgebildet ist, dass es eine Containerinhalts-Ladeliste (54) erzeugt, die eine Poststückinformation enthält, welche die Poststücke (12) in einen der Container (13) beschreibt, und wobei das Wegverfolgungssystem weiterhin so ausgebildet ist, dass es eine Containerinhalts-Ladeliste (54) von dem Ladelistenerzeugersystem hochlädt und die Containerinhalts-Ladeliste (54) dem Adressat anzeigt.

9. Container-Postbeförderungssystem (10) nach Anspruch 1 weiterhin enthaltend
eine Poststückinformationsvorrichtung solcher Konfiguration, dass sie zu jedem der Poststücke (12) eine zugehörige Poststückinformation bestimmt und
einen Identifikatorerzeuger, welcher eine Mehrzahl von Identifikatoren erzeugt, die jeweils einem einer Mehrzahl von Containern (13) entsprechen, wobei
das Sortiersystem weiterhin eine Sortiervorrichtungssteuereinrichtung (41) aufweist, die mit der Poststückinformationsvorrichtung, dem Identifikatorerzeuger und dem Sortiersystem zusammengeschaltet ist, und der die Poststückinforznation von der Poststückinformationsvorrichtung und der jedem der Container (13) zugeordnete Identifikator von der Identifikatorerzeugervorrichtung zugeführt wird,
wobei die Sortiervorrichtungssteuereinrichtung (41) ferner so ausgebildet ist, dass sie das Sortiersystem anweist, einen Teil der Poststücke (12) unter Verwendung der Poststückinformation zu einem ausgewählten der Container (13) zu leiten, und den Teil der zu den ausgewählten Container (13) geführten Poststücke (12) mit dem Identifikator des ausgewählten Containers (13)zu korrelieren,
wobei das Wegverfolgungssystem mit einer Mehrzahl von Wegverfolgungseinrichtungen zusammengeschaltet ist und weiterhin so ausgebildet ist, dass es von einer der Wegverfolgungseinrichtungen Wegverfolgungsinformation erhält, die am Adressatenauslieferungsort die Ermittlung des dem ausgewählten Container (13) zugeordneten Identifikators angibt, und
wobei das Ladelistenerzeugersystem weiterhin in Verbindung mit dem Adressaten steht und ferner eine Wegverfolgungsinformation von dem Wegverfolgungssystem erhält, unter Verwendung des Identifikators eine Ladeliste erzeugt durch Korrelation der Poststückinformation, welche jedem der Poststücke (10) in dem Container (13) zugeordnet ist, mit der Wegverfolgungsinformation, welche das Feststellen des Containers (13) am Adressatenauslieferungsort anzeigt, und die Ladeliste dem Adressaten zur Rechnungsstellung und Auslieferung der Poststücke (12) an ihn elektronisch mitteilt.

10. Container-Postbeförderungssystem (10) nach Anspruch 9, bei welchem das Wegverfolgungssystem weiterhin so ausgebildet ist, dass es von anderen Wegverfolgungseinrichtungen Wegverfolgungsinformation bekommt, welche die Ermittlung von Identifikatoren längs eines Beförderungsweges des Containers (13) zum Ort des Adressaten anzeigt.

11. Container-Postbeförderungssystem (10) nach Anspruch 1, weiterhin enthaltend
eine Postbeförderungs-Informationsvorrichtung mit einem Verarbeitungselement, das in Verbindung mit dem Sortiersystem und dem Wegverfolgungssystem steht ist und dem
eine Poststückinformation auf jedem der Mehrzahl von Poststücken (12) von dem Sortiersystem, und
eine Mehrzahl von Containeridentifikatoren zugeführt werden,
dass die Poststückinformation jedes der Poststücke (12) dem Containeridentifikator des Containers (13), in welchen das Poststück (12) sortiert worden war, zuordnet,
und dem ferner von dem Wegverfolgungssystem Wegverfolgungsinformation zugeführt wird, welche die Feststellung eines der Mehrzahl von Containeridentifikatoren am Beförderungsort anzeigt,
und dass unter Verwendung des Containeridentifikators Ladelistendaten erzeugt durch Korrelieren, der die Auslieferung des Containers am Auslieferungsort anzeigenden Wegverfolgungsinformation mit der Poststückinformation der Poststücke (12) in dem Container (13).

12. Container-Postbeförderungssystem (10) nach Anspruch 1, bei welchem die Poststückinformation jedes der Poststücke (12), die in einen der Container (13) sortiert worden sind, ein gemeinsames Erscheinungsbild hat.

13. Container-Postbeförderungssystem (10) nach Anspruch 1, bei welchem die Wegverfolgungsinformation auch die Feststellung des Identifikators längs eines Beförderungsweges zum Beförderungsort angibt, und bei welchem das Bearbeitungselement weiterhin die Beförderungswegermittlungen mit der Poststückinformation in den Ladelistendaten korreliert.

14. Verfahren zum Sortieren und Befördern einer Mehrzahl von Poststücken (10) in eine Mehrzahl von Containern (13) mit den Schritten:
Erfassen einer Poststückinformation auf jedem Poststücke (12),
Sortieren der Poststücke (12) zwischen einer Mehrzahl von Containern (13), deren jedem ein Identifikator zugeordnet ist,
Vorsehen von Verfolgungsinformation, welche das Feststellen des Identifikators auf einem der Container (13) anzeigt, wobei dieses Feststellen der Beförderung des Containers (13) zu einem Beförderungsort entspricht,
Erzeugen einer Ladeliste unter Verwendung des Identifikators durch Korrelieren der Wegverfolgungsinformation, welche die Beförderung des Containers (13) zum Auslieferungsort angibt, mit der Poststückinformation auf jeden der Poststücke (12) in dem Container (13).

15. Verfahren Anspruch 14, bei welchem weiterhin die Containeridentifikatoren erzeugt werden und jeder der Identifikatoren jeweils einem der Container (13) zugeordnet werden.

16. Verfahren Anspruch 14, bei welchem die Ladeliste einem Adressaten elektronisch übermittelt wird.

17. Verfahren Anspruch 14, bei dem Wegverfolgungsinformation gewonnen wird, die die Ermittlung des Containers (13) längs eines Beförderungsweges zum Auslieferungsort anzeigt, und bei welchem die Erzeugung der Ladeliste ein Korrelieren der Wegverfolgungsinformation, welche das Feststellen des Containers (13) längs des Beförderungsweges angibt, mit der Poststückinformation auf jedem der Poststücke (12) in dem Container unter Verwendung des Containeridentifikators umfasst.

18. Verfahren Anspruch 14, ferner **gekennzeichnet durch** die Schritte:
Erzeugen einer Mehrzahl von Identifikatoren, deren jeder einen der Mehrzahl der Container (13) zugeordnet ist,
Zuführen eines Teils der Poststücke (12) zu einem ausgewählten der Container (13) unter Verwendung der Poststückinformation und Korrelation des zu dem ausgewählten Container (13) geleiteten Teils der Poststücke (12) mit dem Identifikator des ausgewählten Containers (13),
Kommunizieren mit einer Mehrzahl von Wegverfolgungseinrichtungen und Erhalten von Wegverfolgungsinformation von einer der Wegverfolgungseinrichtungen, welche eine Ermittlung des zu dem ausgewählten Container (13) gehörigen Identifikators am Adressatenauslieferungsort angibt, und
Erzeugung einer Ladeliste unter Verwendung des Identifikators **durch** Korrelation, der jedem der Poststücke (12) in den Container (13) zugeordneten Poststückinformation mit der Wegverfolgungsinformation, welche die Ermittlung des Containers (13) am Adressatenauslieferungsort angibt, und
Übermittlung der Ladeliste an den Adressaten zur Ermöglichung der Abrechnung und weiterhin Übermittlung der Poststücke (12) an ihn.

19. Computerprogrammerzeugnis zur Steuerung des Sortierens, der Beförderung und der Wegverfolgung einer Mehrzahl von Poststücken in einer Mehrzahl von Containern, wobei das Computerprogrammerzeugnis ein computerlesbares Speichermedium mit darin gespeicherten computerlesbaren Programmcodeteilen enthält und die computerlesbaren Programmcodeteile umfassen:
einen ersten ausführbaren Teil zur Erlangung von Poststückinformation auf jedem der Poststücke (12) in jedem der Mehrzahl von Container (13),
einen zweiten ausführbaren Teil zum Sortieren der Poststücke (12) zwischen der Mehrzahl von Containern (13), wobei jedem der Container (13) ein Identifikator zugeordnet ist,
einem dritten ausführbaren Teil zur Erlangung von Wegverfolgungsinformation, welche die Ermittlung des Identifikators auf einem der Container (13) angibt, was der Beförderung des Containers (13) zu einem Auslieferungsort entspricht,
und einem vierten ausführbaren Teil zur Erzeugung einer Ladeliste unter Verwendung des Identifikators durch Korrelation der die Beförderung des Containers zum Auslieferungsort angebenden Wegverfolgungsinformation mit der Poststückinformation auf jedem der Poststücke (12) in dem Container (13).

## Revendications

1. Système de distribution de courriers en conteneur (10) destiné à distribuer une pluralité d'envois postaux (12), ledit système comprenant :
un système de tri apte à obtenir une information d'envoi postal sur chacun des envois postaux (12) se trouvant dans chaque conteneur d'une pluralité de conteneurs (13) et à classer les envois postaux (12) dans la pluralité de conteneurs (13), chacun desdits conteneurs (13) étant associé à un identifiant ;
un système de suivi configuré pour obtenir une information de suivi indiquant la détection de l'identifiant sur l'un des conteneurs (13), la détection correspondant à la distribution du conteneur (13) sur un lieu de distribution ; et
un système de génération de manifeste en liaison de communication avec le système de tri et le système de suivi, **caractérisé en ce que** le système de génération de manifeste est configuré pour générer un manifeste en corrélant, au moyen de l'identifiant, l'information de suivi indiquant la distribution du conteneur (13) sur le lieu de distribution, avec l'information d'envoi postal sur chacun des envois postaux (12) se trouvant dans le conteneur (13).

2. Système d'information de distribution de courriers en conteneur (10) selon la revendication 1, dans lequel l'information de suivi indique la détection optique des identifiants associés aux conteneurs (13).

3. Système de distribution de courriers en conteneur (10) selon la revendication 1 ou la revendication 2, dans lequel le système de tri inclut un système d'information de courrier postal possédant un scanner configuré pour obtenir l'information de courrier postal à partir des envois postaux (12) et dans lequel le système de tri est configuré pour trier les envois postaux (12) en se fondant sur l'information d'envoi postal.

4. Système de distribution de courriers en conteneur (10) selon l'une quelconque des revendications précédentes, comprenant en outre un appareil de génération d'identifiants configuré pour générer une pluralité d'identifiants et associer chacun des identifiants à un conteneur correspondant des conteneurs (13).

5. Système de distribution de courriers en conteneur (10) selon l'une quelconque des revendications précédentes, comprenant en outre un appareil de comptage d'envois postaux configuré pour enregistrer une identité client, recevoir une pluralité d'envois postaux (12) associés à l'identité client, générer un comptage des envois postaux (12) et associer le comptage à l'identité client.

6. Système de distribution de courriers en conteneur (10) selon la revendication 5, comprenant en outre un système de facturation (525) configuré pour calculer un coût des services de tri et de distribution pour distribuer les envois postaux (12) en fonction du comptage des envois postaux (12).

7. Système de distribution de courriers en conteneur (10) selon l'une quelconque des revendications précédentes, dans lequel le système de tri inclut une infrastructure de tri régionale (19) apte à classer les envois postaux (12) dans les conteneurs (13) en vue de la distribution à une infrastructure de tri locale (20) configurée pour classer chacun des envois postaux (12) dans les différents conteneurs (13) en utilisant une adresse de distribution de l'information de distribution.

8. Système de distribution de courriers en conteneur (10) selon l'une quelconque des revendications précédentes, dans lequel le système de génération de manifeste est en outre configuré pour générer un manifeste de contenu de conteneur (54) incluant une information d'envoi postal décrivant les envois postaux (12) se trouvant dans l'un des conteneurs (13) et dans lequel le système de suivi est en outre configuré pour envoyer un manifeste de contenu de conteneur (54) du système de génération de manifeste au destinataire et afficher le manifeste de contenu de conteneur (54) chez celui-ci.

9. Système de distribution de courriers en conteneur (10) selon la revendication 1, comprenant en outre :
un appareil d'information d'envoi postal configuré pour déterminer une information d'envoi postal associée à chacun des envois postaux (12) ; et
un générateur d'identifiants configurée pour générer pluralité d'identifiants, chacun desdits identifiants étant associé à un conteneur parmi une pluralité de conteneurs (13),
le système de tri comprenant en outre :
un contrôleur d'appareil de tri (41) en liaison de communication avec l'appareil d'information d'envoi postal, le générateur d'identifiants et le système de tri,
• le contrôleur d'appareil de tri (41) étant configuré pour obtenir l'information d'envoi postal auprès de l'appareil d'information d'envoi postal et l'identifiant associé à chacun des conteneurs (13) auprès de l'appareil de génération d'identifiants ; et
• le contrôleur d'appareil de tri (41) étant configuré en outre pour ordonner au système de tri de diriger une partie des envois postaux (12) vers un conteneur sélectionné parmi les conteneurs (13) en utilisant l'information d'envoi postal et de corréler la partie des envois postaux (12) dirigés vers le conteneur sélectionné (13) avec un identifiant du conteneur sélectionné (13) ;
le système de suivi en liaison de communication avec une pluralité de dispositifs de suivi et configuré en outre pour recevoir une information de suivi de l'un des dispositifs de suivi indiquant la direction, sur un lieu de transfert à un destinataire, de l'identifiant associé au conteneur sélectionné (13) ; et
le système de génération de manifeste en liaison de communication avec le destinataire, le système de génération de manifeste étant en outre configuré pour recevoir l'information de suivi du système de suivi, générer un manifeste en corrélant, au moyen de l'identifiant, l'information de courrier postal associée à chacun des envois postaux (12) se trouvant dans le conteneur (13) et l'information de suivi indiquant la détection du conteneur (13) sur le lieu de transfert au destinataire, et communiquer par voie électronique le manifeste au destinataire afin de faciliter la facturation et en outre la distribution des envois postaux (12) chez le destinataire.

10. Système de distribution de courriers en conteneur (10) selon la revendication 9, dans lequel le système de suivi est en outre configuré pour recevoir une information de suivi d'autres dispositifs de suivi indiquant la détection des identifiants le long d'un itinéraire de distribution du conteneur (13) sur son chemin vers le lieu de transfert au destinataire.

11. Système de distribution de courriers en conteneur (10) selon la revendication 1, comprenant en outre :
un dispositif d'information de distribution de courriers comprenant un élément de traitement en liaison de communication avec le système de tri et le système de suivi, ledit élément de traitement étant configuré pour :
• recevoir du système de tri l'information d'envoi postal se trouvant sur chaque envoi postal de la pluralité d'envois postaux (12),
• recevoir la pluralité d'identifiants de conteneurs,
• associer l'information d'envoi postal de chacun des envois postaux (12) à l'identifiant de conteneur du conteneur (13) dans lequel l'envoi postal (12) a été classé,
• recevoir une information de suivi du système de suivi, ladite information de suivi indiquant la détection d'un identifiant de conteneur de la pluralité d'identifiants de conteneur sur le lieu de distribution, et
• générer une donnée de manifeste en corrélant, au moyen de l'identifiant de conteneur, l'information de suivi indiquant la distribution du conteneur (13) sur le lieu de distribution avec l'information d'envoi postal des envois postaux (12) se trouvant dans le conteneur (13).

12. Système de distribution de courriers en conteneur (10) selon la revendication 1, dans lequel l'information d'envoi postal de chacun des envois postaux (12) classés dans l'un des conteneurs (13) a un aspect courant.

13. Système de distribution de courriers en conteneur (10) selon la revendication 1, dans lequel l'information de suivi inclut également des indications de détection de l'identifiant sur un itinéraire de distribution vers le lieu de distribution et dans lequel l'élément de traitement est en outre configuré pour corréler les détections d'itinéraire de distribution avec l'information d'envoi postal dans la donnée de manifeste.

14. Procédé de tri et de distribution d'une pluralité d'envois postaux (12) dans une pluralité de conteneurs (13), ledit procédé comprenant :
l'obtention d'une information d'envoi postal sur chacun des envois postaux (12) ;
le classement des envois postaux (12) dans la pluralité de conteneurs (13), chacun des conteneurs (13) étant associé à un identifiant ;
l'obtention d'une information de suivi indiquant la détection de l'identifiant sur l'un des conteneurs (13), la détection correspondant à la distribution du conteneur (13) sur un lieu de distribution ;
la génération d'un manifeste en corrélant, au moyen de l'identifiant, l'information de suivi indiquant la distribution du conteneur (13) sur le lieu de distribution avec l'information d'envoi postal sur chacun des envois postaux (12) se trouvant dans le conteneur (13).

15. Procédé selon la revendication 14, comprenant en outre la génération des identifiants de conteneurs et l'association de chacun des identifiants à un conteneur correspondant des conteneurs (13).

16. Procédé selon la revendication 14, comprenant en outre la transmission du manifeste à un destinataire par voie électronique.

17. Procédé selon la revendication 14, comprenant en outre l'obtention d'une information de suivi indiquant la détection du conteneur (13) sur un itinéraire de distribution sur le lieu de distribution et dans lequel la génération du manifeste inclut en outre la corrélation de l'information de suivi indiquant la détection du conteneur (13) sur l'itinéraire de distribution avec l'information d'envoi postal sur chacun des envois postaux (12) se trouvant dans le conteneur au moyen de l'identifiant de conteneur.

18. Procédé selon la revendication 14, **caractérisé par** les étapes consistant à :
générer une pluralité d'identifiants, chacun desdits identifiants étant associé à un conteneur de ladite pluralité de conteneur (13) ;
diriger une partie des envois postaux (12) vers un conteneur sélectionné des conteneurs (13) en utilisant l'information d'envoi postal et en corrélant la partie des envois postaux (12) dirigée vers le conteneur sélectionné (13) avec l'identifiant du conteneur sélectionné (13) ;
communiquer avec une pluralité de dispositifs de suivi et recevoir une information de suivi de l'un des dispositifs de suivi indiquant la détection, sur un lieu de transfert à un destinataire, de l'identifiant associé au conteneur sélectionné (13) ; et
générer un manifeste en corrélant, au moyen de l'identifiant, l'information d'envoi postal associée à chacun des envois postaux (12) se trouvant dans le conteneur (13) et l'information de suivi indiquant la détection du conteneur (13) sur le lieu de transfert à un destinataire ; et
communiquer le manifeste au destinataire pour faciliter la facturation et en outre la distribution des envois postaux (12) chez le destinataire.

19. Programme d'ordinateur destiné à commander le classement, la distribution et le suivi d'une pluralité d'envois postaux dans une pluralité de conteneurs, le programme d'ordinateur comprenant un support de stockage lisible par ordinateur dans lequel sont stockées des parties de code de programme lisibles par ordinateur, les parties de code de programme lisibles par ordinateur comprenant :
une première partie exécutable destinée à obtenir une information d'envoi postal sur chacun des envois postaux (12) se trouvant dans chaque conteneur de la pluralité de conteneurs (13),
une deuxième partie exécutable destinée à classer les envois postaux (12) dans la pluralité de conteneurs (13), chacun des conteneurs (13) étant associé à un identifiant ;
une troisième partie exécutable destinée à obtenir une information de suivi indiquant la détection de l'identifiant se trouvant sur l'un des conteneurs (13), la détection correspondant à la distribution des conteneurs (13) sur un lieu de distribution ; et
une quatrième partie exécutable destinée à générer un manifeste en corrélant, au moyen de l'identifiant, l'information de suivi indiquant la distribution du conteneur (13) sur le lieu de distribution avec l'information d'envoi postal sur chacun des envois postaux (12) se trouvant dans le conteneur (13).
